(19) Europäisches Patentamt
European Patent Office
Office européen des brevets

(11) **EP 2 541 716 A1**

(12) **EUROPEAN PATENT APPLICATION**
published in accordance with Art. 153(4) EPC

(43) Date of publication:
**02.01.2013 Bulletin 2013/01**

(51) Int Cl.:
***H02J 3/00*** (2006.01)

(21) Application number: **11747039.3**

(22) Date of filing: **23.02.2011**

(86) International application number:
**PCT/JP2011/001021**

(87) International publication number:
**WO 2011/105070 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2010 JP 2010040276**

(71) Applicant: **Panasonic Corporation**
**Kadoma-shi**
**Osaka 571-8501 (JP)**

(72) Inventor: **KAJI, Mitsuru**
**Osaka 540-6207 (JP)**

(74) Representative: **Kügele, Bernhard et al**
**Novagraaf International SA**
**Chemin de l'Echo 3**
**1213 Onex (CH)**

(54) **DEMAND AND SUPPLY CONTROL APPARATUS, DEMAND AND SUPPLY CONTROL METHOD, AND PROGRAM**

(57) A supply-and-demand control apparatus (100) is used that includes an input-output relationship obtaining unit (1001) that obtains information (100i) on energy input-output relationships between a plurality of energy devices including an added energy device, an operation planning unit (1002) that calculates, from the information (100i), the values of control parameters to the plurality of energy devices including the added device, and a supply-and-demand control unit (1003) that sends the calculated values as commands to the plurality of energy devices including the added device.

FIG. 18

**Description**

[Technical Field]

The present invention relates to control of a system in which energy, such as electricity and heat, is supplied to a building and, more particularly, to a method of calculating a plan for operation of energy devices used for the system such as an electric generator and a heat source device.

[Background Art]

Conventionally, systems have been studied in which energy devices that operate using renewable energies are introduced into a building. With such systems, a trial has been made to reduce, by efficiently operating such energy devices, $CO_2$ discharged with energy consumption in a building.

As one of such systems, a co-generation (combined heat and power) system is attracting attention in which an electric generator is installed in a building or the like to simultaneously supply electricity and heat generated during power generation by the electric generator. In wide regions including Europe, residual heat generated simultaneously with power generation is defined as renewable energy as well as light energy radiated from the sun.

As a co-generation system intended for houses, those using fuel cells are at the stage of being put to practical use. In many of co-generation systems put to practical use, a heat exchanger that exchanges residual heat generated simultaneously with power generation with hot water and a hot water storage tank that is equipment for storing hot water are used in combination in addition to electric power generating means represented by fuel cells.

This is because in general, there is a temporal mismatch between the demand of electric power and the demand of heat in a building. In a case where there is a temporal mismatch, there is a need to temporarily store at least one of electricity and heat generated at the time of power generation and to supply the electricity and/or the heat according to a demand. With such a purpose, heat storage by means of hot water can be realized with relatively low-priced equipment.

There is not only a temporal mismatch but also a quantitative mismatch between the supply of electricity and heat by a co-generation system, and the demand of electricity and the demand of heat. The ratio of the demand of heat and the demand of electricity (heat-to-power ratio) in a building significantly differs between the summer season and the winter season. On the other hand, the heat-to-power ratio in the amount of supply from fuel cells is almost constant regardless of the season.

Therefore, combining a heat source device using electricity with a device, such as fuel cells, which supplies both generated power and residual heat, is conceivable. As a heat source device using electricity for generation of heat, widespread use of heat pump techniques, for example, is expected. Heat pumps use atmospheric heat or geothermal heat as a low-temperature heat source. The atmospheric heat or geothermal heat is defined as renewable energy.

A method in PTL 1 has been disclosed as a method of developing a plan for operation of a co-generation system and a plurality of heat source devices such as heat pumps.

PTL 1 discloses an operation planning system for energy supply equipment having a heat storage tank. According to the technique in PTL 1, calculation of a plan for operation of heat source devices is performed on the basis of the behavior of the entire system with respect to the pattern of the devices to be operated, a mathematical expression of the cost produced therewith, and a forecast of a heat demand during operation, by using dynamic programming, as is that in NPL 1.

[Citation List]

[Patent Literature]

[PTL 1] Japanese Patent No. 3763767

[Non Patent Literature]

[NPL 1] Bakirtzis, A.G.; Dokopoulos, P.S., "Short term generation scheduling in a small autonomous system with unconventional energy sources," Power Systems, IEEE Transactions on, vol.3, no.3, pp.1230-1236, Aug 1988

[Summary of Invention]

[Technical Problem]

In a case where an operation plan is calculated by mathematical programming in such a way, devices can be operated so that the energy cost is minimized with respect to a forecast demand pattern, if a model with which the behavior of a system is prescribed is correct.

However, a technique using the above-described mathematical programming requires modeling of the behavior of a system and a produced cost based on theory. Furthermore, when a new device is added to the system, redoing modeling of the system which includes the added device is required, and a manager having expert knowledge is needed.

With a system without a manager expert in minimizing the energy cost of a building, therefore, there is no other choice but to use one of a control method of using a combination of devices modeled in advance and a rule-based control method. Thus, there is a problem that it is impossible to control the energy cost of a system in an optimum fashion when a new device is added to the system.

The present invention has been conceived in view of such circumstances and has an object of providing a supply-and-demand control apparatus that is capable of reducing, even when a new device is added, the operation cost of a system which supplies a plurality of energies, such as electricity and heat, only by inputting a connection relationship between devices including an added device.

[Solution to Problem]

In order to solve the above problems, a supply-and-demand control apparatus according to an aspect of the present invention includes: an obtaining unit configured to obtain (i) power consumption of a device that operates using electric power and (ii) heat consumption of a device that operates using heat; a forecast unit configured to obtain demand forecast data on electric power and an amount of heat, using the obtained power consumption and the obtained heat consumption, respectively; a system configuration obtaining unit configured to obtain information when an energy device is newly added to a building, the information being for specifying an energy input-output relationship between energy devices including the added energy device; a calculation unit configured to calculate, using the demand forecast data and the information for specifying the energy input-output relationship, a planned value of a control parameter for controlling an operation of each of the energy devices to be controlled; and a planning control unit configured to transmit the calculated planned value to each of the energy devices to be controlled which include the added energy device.

Demand forecast data relating to electric power and an amount of heat refers to, for example, data for specifying the electric power and the amount of heat.

Also, for example, the above-mentioned information is information for identifying two energy devices in such an energy input-output relationship that energy (e.g., heat) flows between the two energy devices, for example, due to the existence of hot water pipe therebetween.

That is, for example, before the addition, the above-mentioned information is not obtained. A first planned value different from a second planned value computed from the information is issued as a command.

After the addition, the above-mentioned information is obtained and the second planned value from the information is issued as a command.

The energy devices are, for example, devices provided in a building, such as a house, which handle energy, e.g., a heat pump, a fuel cell, and a hot water storage tank.

The planned value is, for example, a value calculated to specify details of processing performed after the calculation of the value by using the calculated value and to thereby enable planning.

For example, it is also possible that the supply-and-demand control apparatus (i) is provided in an energy supply system including an active energy device that operates according to the control parameter and a passive energy device that passively has energy inputted from and outputted to a demand-side device and an energy device other than the active energy device, and (ii) generates the control parameter for controlling the active energy device, the system configuration obtaining unit is configured to obtain, as the information on the energy input-output relationship, the energy input-output relationship between the active energy device and the passive energy device, the calculation unit includes a system model calculation unit and a device model calculation unit, the system model calculation unit is configured to (i) specify, from the information on the energy input-output relationship obtained by the system configuration obtaining unit, a sequence of calculation in which an amount of energy input or output of each of the energy devices is calculated, and (ii) specify a value of the amount of energy to be inputted to or outputted from the passive energy device, from the amount of energy to be inputted to or outputted from one of the energy devices that is calculated earlier in the specified sequence of calculation of the amount of energy input or output, the device model calculation unit is configured to calculate, in the sequence of calculation of the amount of energy input or output specified by the system model calculation unit, the amount of energy input or output of each of the energy devices included in the energy supply system, from the planned value of the control parameter for the active energy device and the value of the amount of energy inputted to or outputted from the passive energy device specified by the system model calculation unit, and the planning control unit is configured to generate the planned value of the control parameter for the active energy device, and send the generated planned value of the control parameter as a command to the active energy device when the amount of energy input or output of each of the energy devices calculated by the device model calculation unit based on the generated planned value of the control parameter is equal to a predetermined amount of energy input or output.

[Advantageous Effects of Invention]

According to an aspect of the present invention, when an energy device is newly added to the system, control parameters according not to the past input-output relationships before the addition but to the current input-output relationships after the addition are calculated. The cost of operation of the energy devices to be controlled can therefore be reduced. Also, a manager having expert knowledge can be saved from having to redo calculation of the model based on theory.

[Brief Description of Drawings]

[FIG. 1] FIG. 1 illustrates a configuration of an energy supply-and-demand system according to Embodiment.
[FIG. 2] FIG. 2 illustrates a configuration of a supply-and-demand apparatus according to Embodiment.
[FIG. 3] FIG. 3 is a diagram showing contents of a display during system configuration input according to Embodiment.
[FIG. 4] FIG. 4 is a diagram showing contents of an inputted system configuration according to Embodiment.
[FIG. 5] FIG. 5 is a diagram showing a procedure for calculation performed by a system model calculation unit using an inputted system configuration according to Embodiment.
[FIG. 6] FIG. 6 is a diagram showing a procedure for calculation performed by a system model calculation unit using an inputted system configuration according to Embodiment.
[FIG. 7] FIG. 7 illustrates the energy supply-and-demand system and others.
[FIG. 8] FIG. 8 is a diagram showing a concrete example of a planning control unit.
[FIG. 9] FIG. 9 is a diagram showing a concrete example of a planning control unit.
[FIG. 10] FIG. 10 is a diagram showing a concrete example of a planning control unit.
[FIG. 11] FIG. 11 is a diagram showing a supply-and-demand control apparatus.
[FIG. 12] FIG. 12 is a diagram showing a supply-and-demand control apparatus.
[FIG. 13] FIG. 13 is a flowchart for the supply-and-demand control apparatus.
[FIG. 14] FIG. 14 shows a table of a control parameter.
[FIG. 15] FIG. 15 is a flowchart of an operation of the supply-and-demand control apparatus.
[FIG. 16] FIG. 16 is a flowchart of an operation of the supply-and-demand control apparatus.
[FIG. 17] FIG. 17 is a flowchart of an operation of the supply-and-demand control apparatus.
[FIG. 18] FIG. 18 is a diagram showing a configuration of the supply-and-demand control apparatus and others.
[FIG. 19] FIG. 19 is a diagram showing an operation of the energy supply-and-demand system.

[Description of Embodiments]

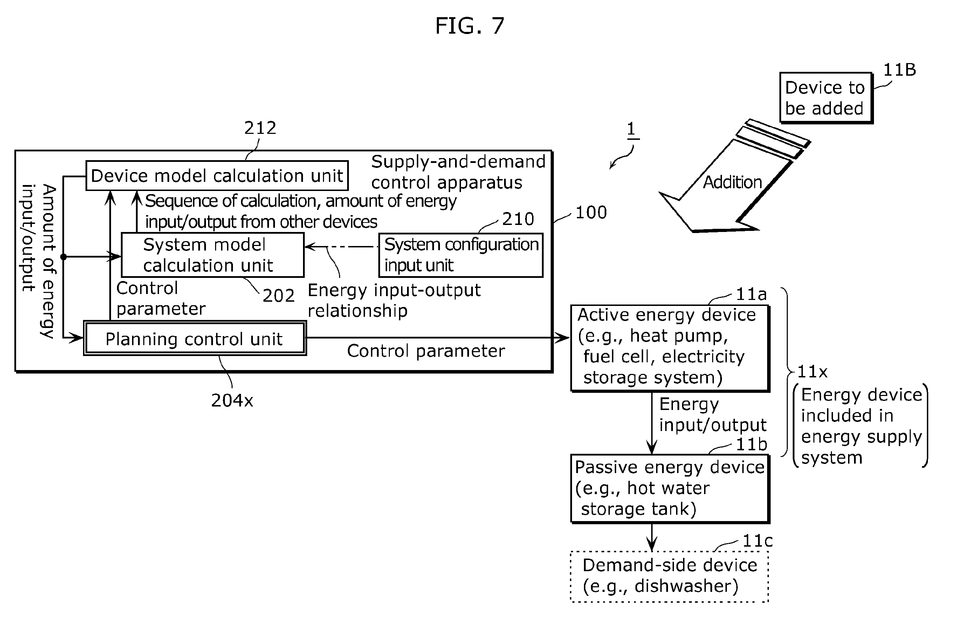

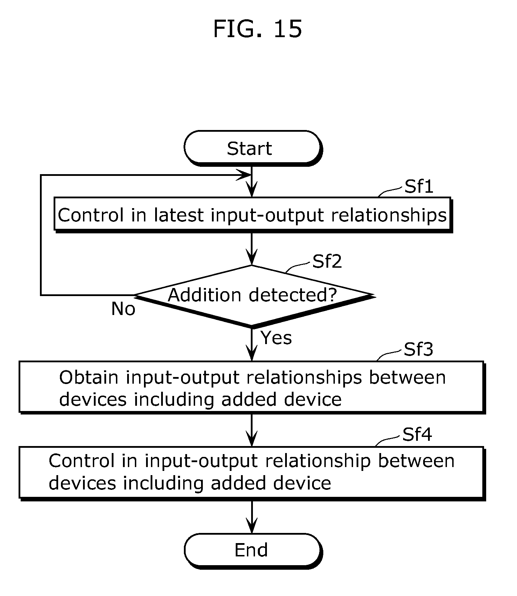

An Embodiment of the present invention will be hereinafter described with reference to the drawings.
It is to be noted that even by the operation described with reference to FIG. 15 in other Embodiments described below, the operation cost of energy devices to be controlled can be reduced and a manager having expert knowledge can be saved from having to redo calculation based on theory. The description with reference to FIG. 15, for example, may be referred to first.

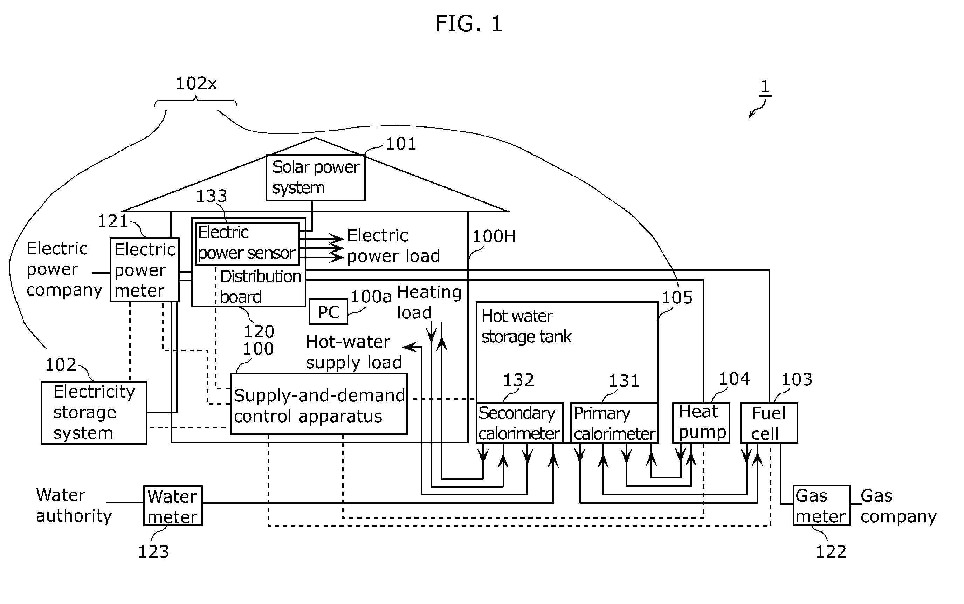

FIG. 1 illustrates an example of a system configuration of an energy supply system 1 in this Embodiment.
The energy supply system 1 is installed in a building, such as a house. The building includes demand-side devices (see demand-side device 11c in FIG. 7) including a device that operates on electric power (electric power load), a device such as a hot-water supply device using hot water (hot-water supply load), and a device with which heating is performed by the heat of hot water (heating load). Energy such as electric power or hot water is supplied to each of the electric power load, the hot-water supply load, and the heating load.
The energy supply system 1 in FIG. 1 includes a solar power system 101, an electricity storage system 102, a fuel cell 103, a heat pump 104, and a hot water storage tank 105.
The energy supply system 1 also includes a distribution board 120, an electric power meter 121, a gas meter 122, and a water meter 123.

The energy supply system 1 further includes a supply-and-demand control apparatus 100 for controlling the operations of these devices.

The solar power system 101 is a generation system capable of converting solar energy into electrical energy. The generated electric power is supplied to the distribution board 120. The electric power output of the solar power system 101 is determined by an amount of light energy radiated from the sun and cannot be controlled from the supply-and-demand control apparatus 100.

For example, an ordinary solar power system may be used as the solar power system 101.

The solar power system 101 provided by using an ordinary solar power system includes, for example, at least a solar panel installed on a roof of the building and a power conditioner that converts direct-current power from solar cells into alternating-current power, which are not illustrated in FIG. 1.

The electricity storage system 102 stores electric charge, for example, when the electric power generated by the solar power system 101 exceeds the demand in the building, while the electricity storage system 102 discharges electric charge when the electric power generated by the solar power system 101 is insufficient relative to the demand in the building.

The electricity storage system 102 is connected to the distribution board 120. The electricity storage system 102 is not only capable of charging with electric power generated by the solar power system 101 but also capable of charging with electric power generated by the fuel cell 103 or electric power supplied from an electric power company.

An ordinary electricity storage system may be used as the electricity storage system 102.

In general, with respect to a connection destination and a connection method for an electricity storage system (electricity storage system 102), a method of making a direct-current connection to a power conditioner (the above-described one) of a solar power system (solar power system 101) and a method of making an alternating-current connection to a distribution board (distribution board 120) are conceivable. In either case of connection to the power conditioner or the distribution board (distribution board 120), a secondary battery, such as a lead battery or a lithium ion battery, is used as means for storing electricity in the electricity storage system 102.

There is a need to charge or discharge the secondary battery by direct current. In the case of connection to the distribution board (distribution board 120), therefore, it is necessary to add a means for converting direct current and alternating current, such as a bidirectional inverter.

The fuel cell 103 supplies electric power and hot water using city gas supplied from a gas company as fuel.

Electric power generated by the fuel cell 103 is supplied to the distribution board 120, as is electric power generated by the solar power system 101.

Water at a low temperature is supplied from the hot water storage tank 105 to a heat exchanger on the fuel cell 103. The fuel cell 103 generates electric power and the heat exchanger simultaneously recovers heat generated by the power generation. The hot water storage tank 105 returns hot water produced by the recovered heat to the hot water storage tank 105.

Since the operating temperature of the fuel cell 103 varies depending on the electrolyte material used and so on, the temperature of hot water to be returned to the hot water storage tank 105 also varies depending on the system of the fuel cell 103.

The operating temperature of a polymer electrolyte fuel cell expected to be available in ordinary houses is 80 to 100 degrees Celsius. In general, the temperature of hot water produced by the polymer electrolyte fuel cell is about 65 degrees Celsius. Also, input of energy and a start time for heating are required at the time of starting power generation from ordinary temperature.

The heat pump 104 absorbs heat from air that is a heat source at a low temperature, using a heat absorption phenomenon at the time of expansion of a refrigerant, and produces hot water using a heating phenomenon at the time of compression of the refrigerant. The efficiency of the heat pump 104 is relatively high in comparison with the case of directly generating heat by a heater or the like.

The heat pump 104 is connected to the distribution board 120 because the heat pump 104 uses electricity in compressing the refrigerant. Then, water at a low temperature is supplied from the hot water storage tank 105 to a heat exchanger at the compression side of the heat pump 104, and hot water produced by recovering heat generated at the time of compression is returned to the hot water storage tank 105.

The hot water storage tank 105 stores the hot water generated by the fuel cell 103 and the heat pump 104. When the hot-water supply load and the heating load in the house need hot water, the hot water storage tank 105 supplies the stored hot water to the loads in need of hot water.

The hot water storage tank 105 includes a primary calorimeter 131 that measures an amount of heat supplied from the fuel cell 103 and the heat pump 104, and a secondary calorimeter 132 that measures an amount of heat supplied to the hot-water supply load and the heating load.

In the hot water storage tank 105, because of a heat radiation loss from a heat storage tank storing hot water, the difference between the two measured amounts of heat of the primary calorimeter 131 and the secondary calorimeter 132 is not equal to the amount of stored heat.

The heat storage tank that stores hot water is therefore equipped with a temperature sensor at a position or temperature sensors at a plurality of positions, not shown in the figure, and the actual amount of stored heat is estimated from information from the temperature sensors.

In hot water storage tank for houses, a temperature stratification type of heat storage tank is ordinarily used in which water at a low temperature and water at a high temperature are stored while being stratified by using a difference in specific gravity between the temperatures.

In this case, water at a low temperature in a lower portion of the tank is supplied to the fuel cell 103 and the heat pump 104 (primary water supply), while returned hot water (primary hot water or returned primary hot water) is stored in an upper portion of the tank.

The amount of heat measured by the primary calorimeter 131 is the amount of heat in returned primary hot water when the amount of heat in primary water supply is assumed to be zero. Therefore, the primary calorimeter 131 ordinarily includes a plurality of means, such as a water temperature meter that measures the water temperature in the primary water supply, a water temperature meter that measures the water temperature of returned primary hot water, flow meters that measure the flow rates of these, and a computing means that computes the amount of heat from the measured value. The hot water in the upper portion of the tank is supplied to the hot-water supply load (see demand-side device 11c in FIG. 7) (secondary hot water or secondary water supply), and the same amount of running tap water (city water) is resupplied to the lower portion of the tank.

Since the heating load (see demand-side device 11c) needs only heat in hot water, the hot water in the upper portion of the tank is supplied to the heat exchanger (secondary hot water or secondary water supply), and the water cooled to a lower temperature by heat dissipation in the heat exchanger (returned secondary water) is returned to the lower portion of the tank.

The amount of heat measured by the secondary calorimeter 132 is the amount of heat in the secondary water supply when the amount of heat in the city water or the returned secondary water is assumed to be zero.

The distribution board 120 includes a breaker or the like necessary for safely using electricity. Electric power is supplied from the distribution board 120 to the electric power load (see demand-side device 11c in FIG. 7).

An electric power sensor 133 is mounted on the distribution board 120. The electric power sensor 133 measures each of the power consumption in the electric power load and the electric power output of the solar power system 101.

The supply-and-demand control apparatus 100 forecasts, as an electric power demand, a value obtained by subtracting the electric power output of the solar power system 101 from the power consumption in the electric power load, and uses the forecast result for supply and demand planning, as described below. Therefore, only the difference between the power consumption in the electric power load and the electric power output of the solar power system 101 may be measured.

The electric power meter 121, the gas meter 122, and the water meter 123 measure an amount of electric power, an amount of city gas, and an amount of running tap water purchased from an electric power company, a gas company, and a water authority, respectively.

The result of summation by multiplying the measured values by unit prices or $CO_2$ emission coefficients for example is equal to the operating cost (economic cost, environmental cost) of the building. The main purpose of the supply-and-demand control apparatus 100 is to reduce this operating cost.

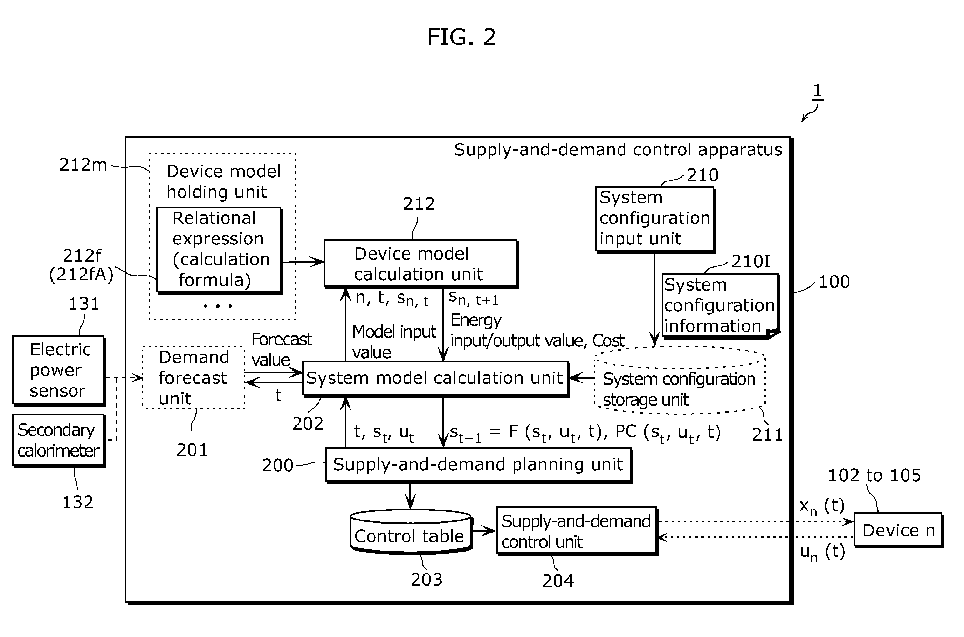

The supply-and-demand control apparatus 100 forecasts demands for two energies of electric power and hot water after the current time by using past demand data obtained from the electric power sensor 133 on the distribution board 120 and the secondary calorimeter 132 on the hot water storage tank 105 (see demand forecast unit 201 (e.g., in FIG. 2)). With respect to electric power, a demand is forecast by subtracting the electric power output of the solar power system 101.

Also, the supply-and-demand control apparatus 100 obtains the price of electricity or the like from the electric power meter 121, for example, when the price of electricity dynamically fluctuates. Also, the supply-and-demand control apparatus 100 obtains the amount of stored energy of electricity from the electricity storage system 102 and the amount of stored energy of hot water from the hot water storage tank 105, and obtains a startup state of the fuel cell 103 from the fuel cell 103.

The supply-and-demand control apparatus 100 periodically sends, as commands, control parameters, for example, with respect to the generated power output, the power consumption or details of the operations of the devices (start/stop) to the electricity storage system 102, the fuel cell 103, and the heat pump 104, by using the obtained information.

With respect to this Embodiment, a device such as the electricity storage system 102, the fuel cell 103, and the heat pump 104 in the energy supply system 1 in FIG. 1 is referred to as "active energy device" (see active energy device 11a in FIG. 7). That is, an active energy device is an energy device having the amount of energy input/output actively controlled by means of a control parameter from the supply-and-demand control apparatus 100, for example, like the devices including the electricity storage system 102.

On the other hand, a device such as the heat storage tank (hot water storage tank) 105 passively having energy inputted from or outputted to another device such as an energy device or a demand-side device, not by a command from the supply-and-demand control apparatus 100, is referred to as "passive energy device" (see passive energy device 11b in FIG. 7).

Also, devices such as a dishwasher and so on included in a building, for example, those other than energy devices 11X belonging to the energy supply system 1 as shown in FIG. 7 are referred to as "demand-side device 11c".

FIG. 2 illustrates a configuration of the supply-and-demand control apparatus 100.

The supply-and-demand control apparatus 100 includes a supply-and-demand planning unit 200, a demand forecast unit 201, a system model calculation unit 202, a control table 203, a supply-and-demand control unit 204, a system configuration input unit 210, and a system configuration storage unit 211.

The whole or a portion of the supply-and-demand control apparatus 100 is, for example, a computer including a Central Processing Unit (CPU), a Random Access Memory (RAM), a Read Only Memory (ROM), etc. It may be understood that each of the components including the supply-and-demand planning unit 200 is a functional block with a function to be implemented in the supply-and-demand control apparatus 100 by execution of a program on the computer.

The supply-and-demand planning unit 200 delivers the value of a noted time point t, the values of a state vector $s_t$, and the values of a control vector $u_t$ to the system model calculation unit 202 with respect to each noted time point t ($t_0 \leq t \leq T$) in the time period from the current time to to time point T ($t_0 < T$) at which an operation plan is to be made. The state vector $s_t$ is a combination of states that the devices in the system (energy supply system 1) can enter at time point t. The control vector $u_t$ is a combination of control parameters to the devices at time point t.

The supply-and-demand planning unit 200 then obtains the values of the state vector $s_{t+1}$ and a value PC ($s_t$, $u_t$, t) of cost from the system model calculation unit 202.

The state vector $s_{t+1}$ is a vector when the parameters expressed by the control vector $u_t$ are given to the devices with respect to the state of the system at time point t expressed by the values of the state vector $s_t$. That is, the state vector $s_{t+1}$ represents a combination of states that the devices can enter in the time step (t + 1) following the time step t in the above-described case.

The value of cost is a value of cost produced in the time step at time point t.

The system model calculation unit 202 receives from the supply-and-demand planning unit 200 the value of noted time point t, the values of the state vector $s_t$ and the values of the control vector $u_t$. The state vector $s_t$ is a vector having as its elements values $s_{n,t}$ of the states of the devices n ($1 \leq n \leq N$) at the time step start point at discrete time point t.

[Math. 1]

$$s_t = \begin{pmatrix} s_{1,t} & s_{2,t} & \cdots & s_{N,t} \end{pmatrix}$$

(Math. 1)

The value of the state $s_{n,t}$ of each device n ($1 \leq n \leq N$) is an amount of electricity or heat stored in the device n, for example, in the case where the device n is a device that stores energy (electricity storage system 102, hot water storage tank 105 or the like). Also, with respect to a device requiring a time or large energy for stopping startup (fuel cell 103 or the like), the value of the state $s_{n,t}$ may be the startup state of the device (= 0 at the time of stoppage, = 1 at the time of startup).

On the other hand, in a case where the device n is a device that does not store energy, does not require a long time (longer than a threshold value) when stopping startup and does not use a large amount of energy (larger than a threshold value) (in the case of heat pump 104), the value of the state $s_{n,t}$ may be unchanged from a fixed value (= 0 for example).

The control vector $u_t$ is a vector having as its elements values $u_{n,t}$ of control parameters to the devices n ($1 \leq n \leq N$) during the period of the time step at time point t.

[Math. 2]

$$\boldsymbol{u}_t = \begin{pmatrix} u_{1,t} & u_{2,t} & \cdots & u_{N,t} \end{pmatrix}$$

(Math. 2)

The value $u_{n,t}$ of the control parameter to each device n ($1 \le n \le N$) is a value such as starting, stopping, or, when the device is in operation, a load factor (indicating at what percent of the rating the operation is). In a case where the device n is a passive energy device (see passive energy device 11b in FIG. 7), the value $u_{n,t}$ of the control parameter may not be changed from a fixed value (= 0 for example).

After receiving these values from the supply-and-demand planning unit 200, the system model calculation unit 202 refers to the system configuration (system configuration information) held by the system configuration storage unit 211 to identify the kinds of necessary forecast values (such as electricity storage, charging and heat storage). The system model calculation unit 202 then obtains forecast values corresponding to the identified kinds at time point t from the demand forecast unit 201.

The demand forecast unit 201 forecasts corresponding demands at noted time point t by using statistical characteristics of past demand data obtained from the electric power sensor 133, the secondary calorimeter 132, and so on.

The system model calculation unit 202 delivers necessary information to a device model calculation unit 212. The delivered information includes the types (models or the like) of the devices n (n = 1, 2 ...) and the value of noted time point t, contained in the system configuration held by the system configuration storage unit 211. The delivered information also includes the values of the states $s_{n,t}$ of the devices n included in the state vector $s_t$, the values of the control parameters $u_{n,t}$ to the devices n included in the control vector $u_t$, and values necessary for calculation with respect to the devices n in the values calculated by the system model calculation unit 202.

The system model calculation unit 202 then obtains from the device model calculation unit 212 the values of the states $s_{t+1}$ of the devices n in the next time step (t + 1) and the amount of energy produced or consumed by each device n or the value of cost produced in the time step at time point t.

The system model calculation unit 202 totalizes the values calculated by the device model calculation unit 212, calculates the values of the state vector $s_{t+1}$ at time point (t + 1) and the cost produced in the entire system in the time step at time point t, and returns the calculation results to the supply-and-demand planning unit 200. The cost produced in the entire system is expressed by the following symbol PC (Math. 3).

[Math. 3]

$$PC(\boldsymbol{s}_t, \boldsymbol{u}_t, t)$$

(Math. 3)

Details of the method of totalization by the system model calculation unit 202 will be described later.

To simplify the notation in the description below, the following relationship is expressed by a mathematical expression (Math. 4) below. This mathematical expression (Math. 4) is a relationship between the value of noted time point t, the values of the state vector $s_t$ and the values of the control vector $u_t$ inputted to the system model calculation unit 202, and the values of the state vector $s_{t+1}$ at time point (t + 1) calculated by the system model calculation unit 202.

[Math. 4]

$$\boldsymbol{s}_{t+1} = F(\boldsymbol{s}_t, \boldsymbol{u}_t, t)$$

(Math. 4)

By using the values returned from the system model calculation unit 202, the supply-and-demand planning unit 200 sets in the control table 203 the values of an array $U(t, s_t)$ ($t_0 \leq t \leq T$) calculated by the following equation (Math. 5).

[Math. 5]

$$U(t,s_t) = \arg\min_{u_t}\left\{\min_{u_{t+1},\cdots,u_T}\sum_t^T PC(s_t,u_t,t)\right\}$$

$$(\because s_{t+1} = F(s_t,u_t,t)) \qquad \text{(Math. 5)}$$

Use of, for example, mathematical programming such as dynamic programming or a typical heuristic algorithm (metaheuristic algorithm) such as a genetic algorithm (GA) or simulated annealing (SA) is suitable for calculation by Math. 5.

The supply-and-demand control unit 204 obtains the value of the state $s_{t0,n}$ of each device n ($1 \leq n \leq N$) at the current time to from each device. Using the value of the current time to and the values of the states $s_{n,t0}$ of the devices n obtained from the respective devices, the supply-and-demand control unit 204 refers to the control table 203 to obtain the control parameters $u_{n,t0}$ to be set in the devices n.

[Math. 6]

$$u_{t_0} = U(t,s_{t_0})$$

$$= \begin{pmatrix} u_{1,t_0} & u_{2,t_0} & \cdots & u_{N,t_0} \end{pmatrix}$$

$$(\because s_{t_0} = \begin{pmatrix} s_{1,t_0} & s_{2,t_0} & \cdots & s_{N,t_0} \end{pmatrix}) \qquad \text{(Math. 6)}$$

When the obtained parameters $u_{n,t0}$ are different from the values presently set in the devices, the supply-and-demand control unit 204 sets the obtained control parameters $u_{n,t0}$ as new control parameters in the devices.

For example, the control table 203 may store the control vector $u_t$ in association with the time points, the devices, and the contents of the state vector $s_{n,t0}$ for the devices. That is, with respect to the states $s_{n,t0}$ of the devices as the contents at each time point, the suitable control vector $u_t$ at the time of control of the devices may be stored in association with the time, the devices, and the contents. At the time associated with the stored control vector $u_t$, the stored control vector $u_t$ may be used when the contents of the state vector s are the associated contents in control on the associated devices.

Before description of details of the method of totalization by the system model calculation unit 202, description will be made of system configuration information 210I stored in the system configuration storage unit 211 and the method of input of system configuration information 210I by the system configuration input unit 210.

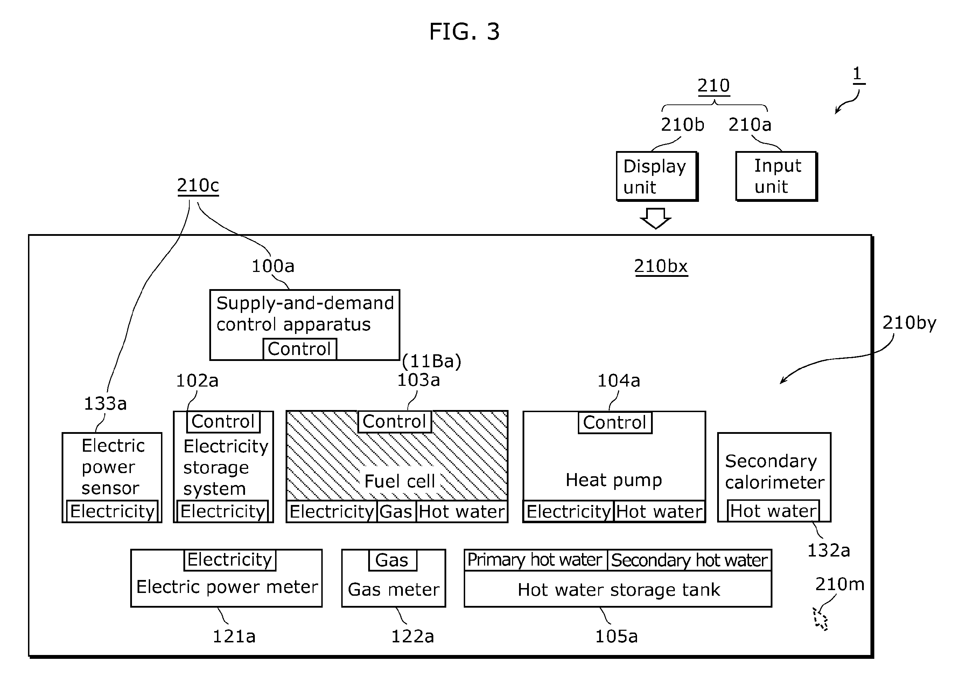

FIG. 3 is a diagram showing contents of a display (screen 210by) during system configuration input in the Embodiment. In FIG. 3, a device to be added to the energy supply system 1 is indicated by a hatched icon 103a. FIG. 3 shows a case where the fuel cell 103 is added to the energy supply system 1.

The system configuration input unit 210 includes a display unit (display means) 210b such as a display, and an input unit 210a (input means) such as a keyboard.

When a user installs or adds a device, the user operates the input unit 210a to display on the display unit 210b the device to be controlled by the supply-and-demand control apparatus 100. Referring to FIG. 3, the fuel cell 103 (icon 103a for the fuel cell) is newly displayed.

On the display unit 210b in the system configuration input unit 210 (in a display area 210bx of the display unit 210b), as shown in FIG. 3, an icon 100a representing the supply-and-demand control apparatus 100, an icon 102a representing the electricity storage system 102, the icon 103a representing the fuel cell 103, an icon 104a representing the heat pump 104, an icon 105a representing the hot water storage tank 105, an icon 121a representing the electric power meter 121, an icon 122a representing the gas meter 122, an icon 132a representing the secondary calorimeter, and an icon 133a representing the electric power sensor 133 are displayed.

That is, icons including the icons 100a and 133a, i.e., icons 210c for the devices set in the system, are displayed. Since the electric power sensor 133 measures the amount of electric power generated by the solar power system 101, the electric power output produced by the solar power system 101 is not displayed on the display unit 210b in the system configuration input unit 210.

The display area 210bx may be a display area or the like on a display for use with a computer such as a personal computer.

More specifically, the display unit 210b in the supply-and-demand control apparatus 100 may issue a command to the computer such as a command to cause the computer to display the display area 210bx so that the computer displays the icon 100a and other icons or the like according to the command.

Also, for example, the display area 210bx may be displayed by a web browser on the computer based on a web service function of the supply-and-demand control apparatus 100.

On each icon 210c, a mark (electricity, gas, hot water, and so on) indicating an interface between the device corresponding to the icon 210c and a different device is overlay-displayed. A mark ("Control" or "Gas" for example) at the upper side of each icon 210c indicates a control input to the device. On the other hand, a mark ("Electricity", "Gas" or "Hot water" for example) at the lower side of each icon indicates a control output from the device.

It is not necessarily required that these marks be displayed just in the way shown in FIG. 3. Also, it is not necessary for the user to make a distinction between a control input and a control output, and these marks are not necessarily required.

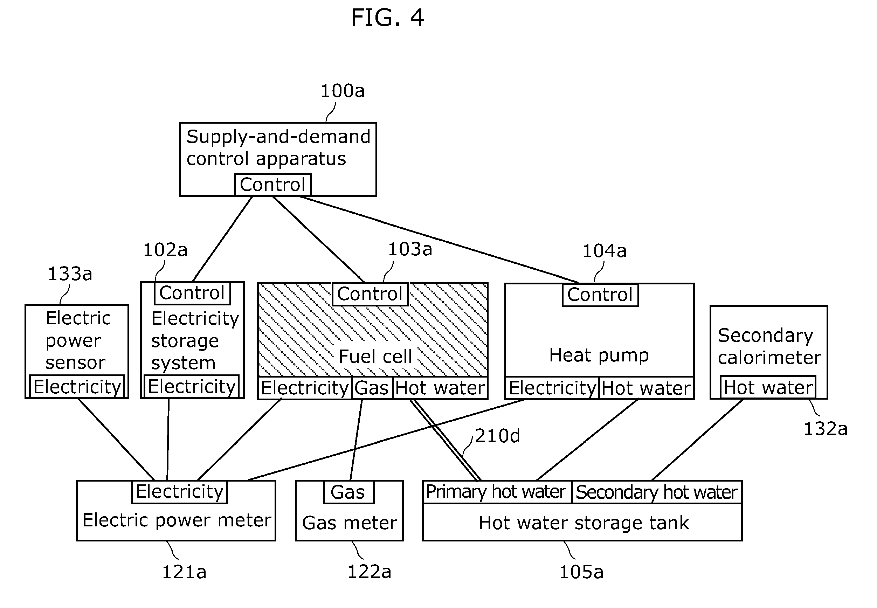

FIG. 4 is a diagram showing an example of the connection relationships between the devices when the fuel cell 103 is added to the energy supply system 1 in this Embodiment.

After the icon 210c for each device is displayed on the display unit 210b in FIG. 3, a user operates the input unit 210a to make connections between the marks (described above) on the icons 210c for the devices that indicate interfaces.

As shown in FIG. 4, after the completion of the connection on the display unit 210b (see display 210d of a connection), the user operates the input unit 210a to store system configuration information 210I on the system configuration displayed on the display unit 210b in the system configuration storage unit 211 (FIG. 2).

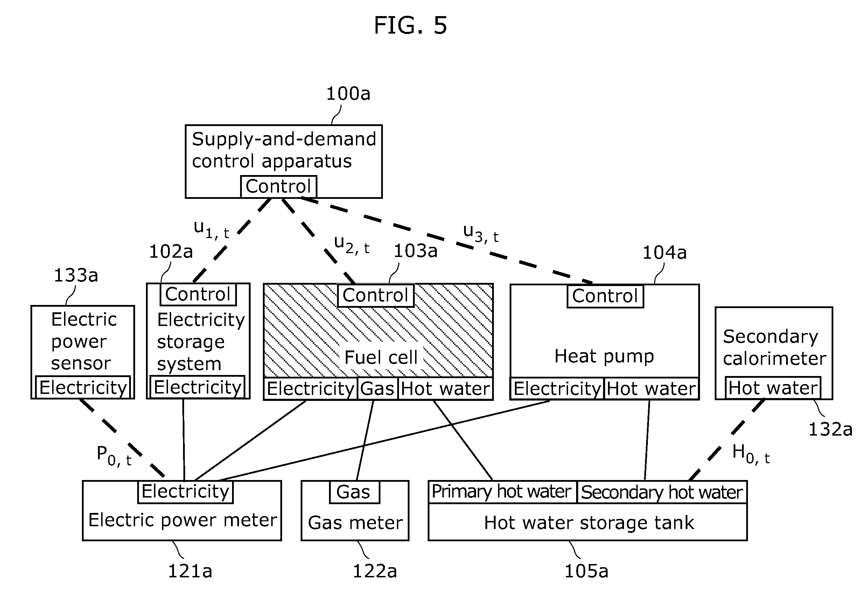

Details of the method of totalization by the system model calculation unit 202 will be described with reference to FIG. 5.

FIG. 5 is a diagram showing a procedure for calculation performed by the system model calculation unit 202 using an inputted system configuration in the Embodiment.

The system model calculation unit 202 receives the values of noted time point t, the state vector $s_t$, and the control vector $u_t$ from the supply-and-demand planning unit 200. The system model calculation unit 202 obtains from the system configuration storage unit 211 the system configuration shown in FIG. 4.

The obtained system configuration includes the electric power sensor 133 measuring electric power demand (see icon 133a for electric power sensor 133 in FIG. 4) and the secondary calorimeter 132 measuring heat demand (see icon 132a).

The system model calculation unit 202 therefore obtains from the demand forecast unit 201 demands at time point t with respect to the electric power sensor 133 and so on, i.e., $P_{0,t}$ ($P_{0,t} < 0$ when the solar power generation output is larger than the demand, or $P_{0,t} > 0$ when the solar power generation output is smaller than the demand) and $H_{0,t}$, which are forecast values of demands of electric power and heat, respectively (FIG. 5).

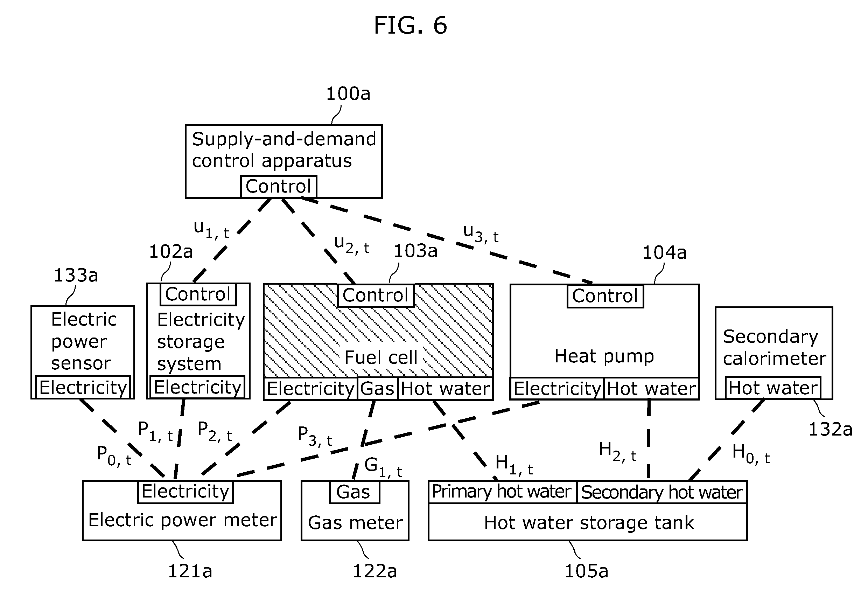

FIG. 6 is a diagram showing a procedure for calculation performed by the system model calculation unit 202 using an inputted system configuration in the Embodiment.

In the case shown in FIG. 6, the electricity storage system 102 (assumed to be device n = 1 for ease of description) has only the control parameter $u_{1,t}$ as a control input. Accordingly, the system model calculation unit 202 delivers the model number of the electricity storage system 102, the value of the state $s_{1,t}$ of the electricity storage system 102, and the value of the control parameter $u_{1,t}$ to the device model calculation unit 212.

The system model calculation unit 202 obtains from the device model calculation unit 212 the value of the state $s_{1,t+1}$ of the electricity storage system 102 at time point (t + 1) and the amount of charge/discharge $P_{1,t}$ in the electricity storage system 102 in the time step at time point t ($P_{1,t} > 0$ during charging, $P_{1,t} < 0$ during discharging).

From the model number for the electricity storage system 102, the device model calculation unit 212 determines calculation formulae ($F_1()$, $G_1()$) for this model number, see calculation formula 212f in FIG. 2) (Math. 7). These calculation formulae are held in the device model calculation unit 212.

The device model calculation unit 212 calculates the values of s1,t+1 and $P_{1,t}$ by using the determined calculation formulae.
[Math. 7]

$$s_{1,t+1} = F_1\left(s_{1,t}, u_{1,t}, t\right)$$

$$P_{1,t} = G_1\left(s_{1,t}, u_{1,t}, t\right)$$

(Math. 7)

Similarly, in the case shown in FIG. 6, the fuel cell 103 (assumed to be device n = 2) has only the control parameter $u_{2,t}$ as a control input.
The system model calculation unit 202 therefore delivers the model number for the fuel cell 103, the value of the state $s_{2,t}$ of the fuel cell 103 at time point t, and the value of the control parameter $u_{2,t}$ to the device model calculation unit 212.
The system model calculation unit 202 then obtains from the device model calculation unit 212 the value of the state $s_{2,t+1}$ of the fuel cell 103 at time point (t + 1), the value of the amount of gas $G_{1,t}$ used by the fuel cell 103 in the time step at time point t, the value of the amount of generated power $P_{2,t}$ ($P_{2,t} < 0$ at the time of power generation), and the value of the amount of recovered heat $H_{1,t}$.
The device model calculation unit 212 determines, from the model number for the fuel cell 103, calculation formulae ($F_2()$, $G_2()$) for this model number (Math. 8). These calculation formulae are stored in the device model calculation unit 212.
The device model calculation unit 212 calculates the value of $s_{2,t+1}$, the value of the amount of used gas $G_{1,t}$, the value of the amount of generated power $P_{2,t}$, and the value of the amount of recovered heat $H_{1,t}$ by using the determined calculation formulae.
[Math. 8]

$$s_{2,t+1} = F_2\left(s_{2,t}, u_{2,t}, t\right)$$

$$\left(G_{1,t} \quad P_{2,t} \quad H_{1,t}\right) = \mathbf{G}_2\left(s_{2,t}, u_{2,t}, t\right)$$

(Math. 8)

Similarly, in the case shown in FIG. 6, the heat pump 104 (assumed to be device n = 3) has only the control parameter $u_{3,t}$ as a control input.
The system model calculation unit 202 therefore delivers the model number for the heat pump 104, the value of the state $s_{3,t}$ of the heat pump 104 at time point t, and the value of the control parameter $u_{3,t}$ to the device model calculation unit 212.
The system model calculation unit 202 then obtains from the device model calculation unit 212 the value of the state $s_{3,t+1}$ of the heat pump 104 at time point (t + 1), the value of the amount of power consumption $P_{3,t}$ ($P_{3,t} \geq 0$) of the heat pump 104 in the time step at time point t, and the value of the amount of recovered heat $H_{2,t}$.
The device model calculation unit 212 determines, from the model number for the heat pump 104, the calculation formulae ($F_3()$, $G_3()$) for this model number (Math. 9). These calculation formulae are stored in the device model calculation unit 212. The device model calculation unit 212 calculates the value of $s_{3,t+1}$, the value of amount of the power consumption $P_{3,t}$, and the value of the amount of recovered heat $H_{2,t}$ by using the determined calculation formulae.
[Math. 9]

$$s_{3,t+1} = F_3\left(s_{3,t}, u_{3,t}, t\right)$$

$$\left(P_{3,t} \quad H_{2,t}\right) = \mathbf{G}_3\left(s_{3,t}, u_{3,t}, t\right) \qquad \text{(Math. 9)}$$

From the system configuration obtained from the system configuration storage unit 211, the system model calculation unit 202 finds that the value of the amount of heat in primary hot water in the time step at time point t, which is the energy input (the amount of input energy) to the hot water storage tank 105 (assumed to be device n = 4), is ($H_{1t}$ + $H_{2,t}$), and that the value of the amount of heat in secondary hot water in the time step at time point t, which is an energy output (the amount of energy output), is $H_{0,t}$.

The system model calculation unit 202 delivers to the device model calculation unit 212 the model number for the hot water storage tank 105, the state $s_{4,t}$ of the hot water storage tank 105 at time point t, the value of the amount of heat ($H_{1,t}$ + $H_{2,t}$) in the primary hot water, and the value of the amount of heat $H_{0,t}$ in the secondary hot water. The system model calculation unit 202 obtains the value of the state $s_{4,t+1}$ of the hot water storage tank 105 at time point (t + 1) from the device model calculation unit 212.

The device model calculation unit 212 determines, from the model number for the hot water storage tank 105, a formula ($F_4$()) for this the model number to calculate the value of $s_{4,t+1}$ (Math. 10). This calculation formula is stored in the device model calculation unit 212.

[Math. 10]

$$s_{4,t+1} = F_4\left(s_{4,t}, H_{1,t} + H_{2,t}, H_{0,t}, t\right) \qquad \text{(Math. 10)}$$

Similarly, from the system configuration obtained from the system configuration storage unit 211, the system model calculation unit 202 finds that the value of the amount of electric power at the electric power meter 121 (assumed to be device n = 5), which is the amount of energy output in the time step at time point t, is ($P_{0,t}$ + $P_{1,t}$ + $p_{2,t}$ + $P_{3,t}$).

The system model calculation unit 202 then delivers the values of the type of the electric power meter 121 and the amount of electric power ($P_{0,t}$ + $P_{1,t}$ + $P_{2,t}$ + $P_{3,t}$) to the device model calculation unit 212 and obtains an electricity charge $L_{5,t}$ in the time step at time point t from the device model calculation unit 212.

The device model calculation unit 212 calculates the value of the electricity charge $L_{5,t}$ by specifying, from the type of the electric power meter 121, the electricity charge table ($L_5$()) for this model number(Math. 11). This electricity charge table is stored in the device model calculation unit 212.

[Math. 11]

$$L_{5,t} = L_5\left(P_{0,t} + P_{1,t} + P_{2,t} + P_{3,t}, t\right) \qquad \text{(Math. 11)}$$

Similarly, from the system configuration obtained from the system configuration storage unit 211, the system model calculation unit 202 finds that the value of the amount of consumed gas at the gas meter 122 (assumed to be device n = 6), which is the amount of energy output in the time step at time point t, is $G_{i,t}$.

The system model calculation unit 202 then delivers the values of the type of the gas meter 122 and the amount of consumed gas $G_{i,t}$ to the device model calculation unit 212 and obtains a gas charge $L_{6,t}$ in the time step at time point t from the device model calculation unit 212.

The device model calculation unit 212 calculates the value of the gas charge $L_{6,t}$ by specifying, from the type of the gas meter 122, the gas charge table ($L_6()$) for this model number (Math. 12). This gas charge table is stored in the device model calculation unit 212.
[Math. 12]

$$L_{6,t} = L_6(G_{1,t}, t)$$

(Math. 12)

After completing the calculation with respect to all the devices, the system model calculation unit 202 returns the device vector $s_{t+1}$ (= $F(s_t, u_t, t)$) at time point (t + 1) and ($L_{5,t} + L_{6,t}$), i.e., the cost PC ($s_t$, $u_t$, t) generated in the entire system in the time step at time point t, to the supply-and-demand planning unit 200.
[Math. 13]

$$F(s_t, u_t, t) = \begin{pmatrix} s_{1,t+1} & s_{2,t+1} & \cdots & s_{N,t+1} \end{pmatrix}$$

$$PC(s_t, u_t, t) = L_{5,t} + L_{6,t}$$

(Math. 13)

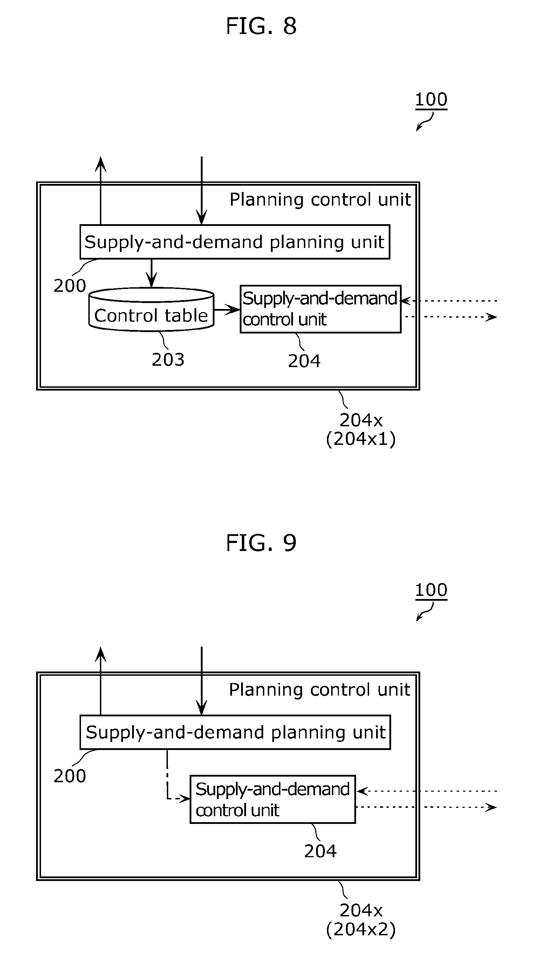

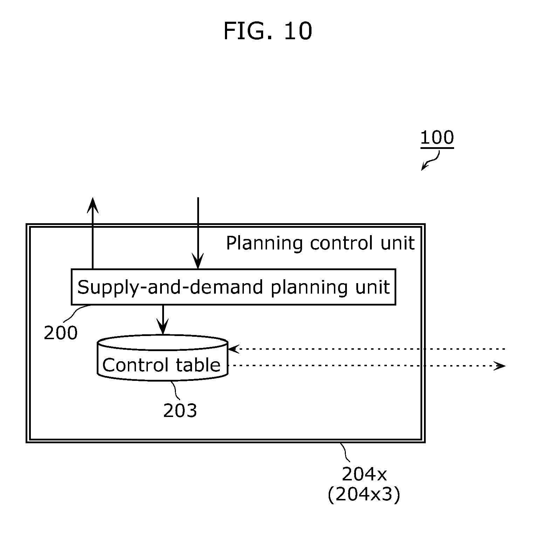

Each of FIGS. 8, 9, and 10 is a diagram showing a concrete example of a planning control unit 204x in FIG. 7 (planning control unit 204x1, planning control unit 204x2, planning control unit 204x3).
The planning control unit 204x includes a supply-and-demand planning unit 200 (FIG. 2), for example, as shown in FIGS. 8, 9, and 10.
The planning control unit 204x may include the supply-and-demand control unit 204 (FIG. 2), as shown in FIGS. 8 and 9.
The planning control unit 204x may include the control table 203, as shown in FIGS. 8 and 10.
Referring to FIG. 2, the three sections: the supply-and-demand planning unit 200, the supply-and-demand control unit 204, and the control table 203 are respectively expressed, while the planning control unit 204x, which is the whole unit including the three sections, is not expressed. Thus, in the supply-and-demand control apparatus 100, only the supply-and-demand planning unit 200 and so on may exist and the planning control unit 204x as the whole unit may not be present.
Thus, a person skilled in the art can make selections for details of the planning control unit 204x. The planning control unit 204x may have any of a number of suitable forms. Specifically, for example, the planning control unit 204x may have a form whose details are easily conceivable by a person skilled in the art or may have a form not easily conceivable, e.g., one for an application of a modification of the invention. Any form of the planning control unit 204x is only an example of the planning control unit 204x as long as the present invention is applied thereto.
The same applies to details of the sections other than the planning control unit 204x.

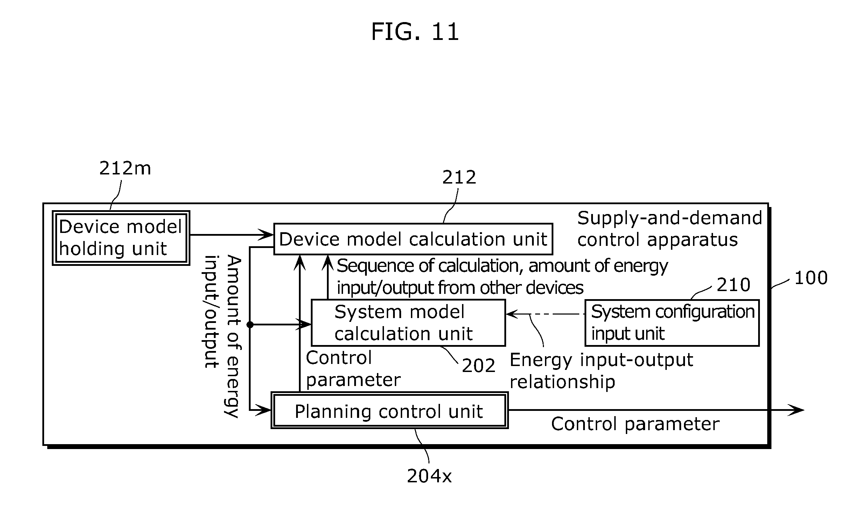

FIG. 11 is a diagram showing the supply-and-demand control apparatus 100 in the case of having a device model holding unit 212m.

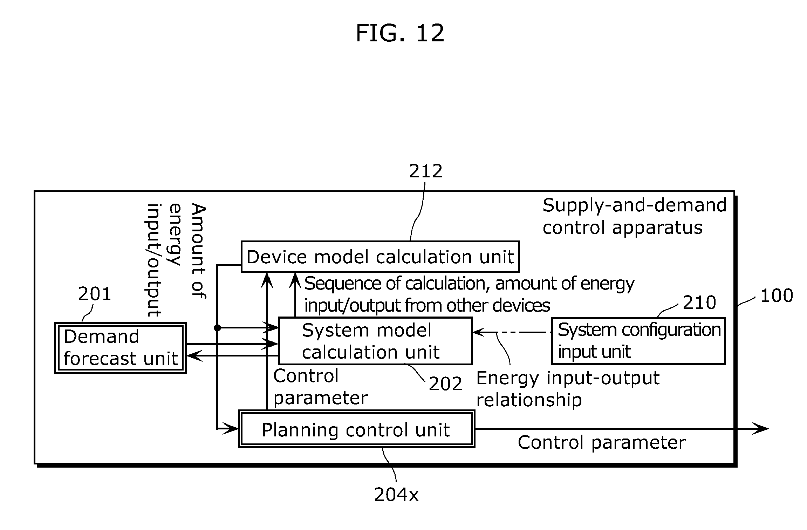

FIG. 12 is a diagram showing the supply-and-demand control apparatus 100 in the case of having the demand forecast unit 201.
To be specific, for example, the supply-and-demand control apparatus 100 may include, as one of the device model holding unit 212m (FIG. 11, FIG. 2) and the demand forecast unit 201 (FIG. 12, FIG. 2), only the device model holding unit 212m (see FIG. 12) (FIG. 11) or, conversely, only the demand forecast unit 201 (FIG. 12). Alternatively, the supply-and-demand control apparatus 100 may include none (see FIG. 7) or both (FIG. 2) of the device model holding unit 212m and the demand forecast unit 201.
To be specific, for example, a case where only the demand forecast unit 201 is included and the device model holding unit 212m is not included (FIG. 12) may be as described below. For example, the supply-and-demand control apparatus 100 may perform the above-described processing by using a function (a server or the like) similar to that of the device model holding unit 212m, which a device provided outside the supply-and-demand control apparatus 100 has.

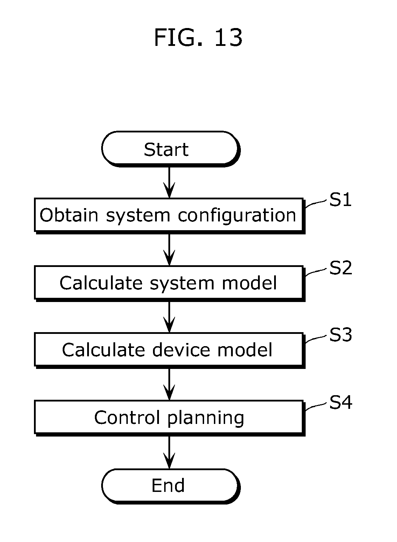

FIG. 13 is a flowchart showing the operation of the supply-and-demand control apparatus 100.

First, with the addition of an energy device (e.g., a device 11B to be added shown in FIG. 7) to the energy supply system 1, system configuration information 210I is inputted (obtained) to the system configuration input unit 210 (S1).

In S1, the inputted system configuration information 210I contains information on the added energy device. For example, in a case where the added device 11B is the hot water storage tank 105, the information contains the suffix "4" in $s_{4,t}$ shown above or an address and a port number or the like for the hot water storage tank 105 corresponding to the suffix "4". Note that in the description with reference to FIG. 13, a case may be taken into consideration in which the hot water storage tank 105, for example, is added, as in the above-described case.

Next, the system model calculation unit 202 obtains a value (information) for the added energy device by means of the inputted system configuration information 210I (S2). For example, in a case where the added energy device is the hot water storage tank 105, the system model calculation unit 202 obtains $s_{4,t}$ or the like.

Next, the system model calculation unit 202 specifies, from the value (information) for the added energy device, control parameters for energy devices to be controlled by the supply-and-demand control apparatus 100 in the energy supply system 1 (S3).

The planning control unit 204x controls the added energy device and other energy devices (e.g., fuel cell 103 and heat pump 104) through the control parameters specified from the information ($s_{4,t}$ or the like) on the added energy device (S4).

This enables preventing an increase in operation cost of the other energy devices and reducing the operation cost of the energy supply system 1 even when an energy device is added.

In S1 (FIG. 13), in a case where the added energy device is a passive energy device (e.g., passive energy device 11b in FIG. 7, hot water storage tank 105), system configuration information 210I for identifying an active energy device (active energy device 11a (fuel cell 103 or the like)) connected to the passive energy device may be inputted to the system configuration input unit 210.

In S2, the system model calculation unit 202 obtains a value (e.g., the amount of heat $H_{1,t}$) of the active energy device (fuel cell 103 or the like) identified from system configuration information 210I and a value ($s_{4,t}$ of hot water storage tank 105) of the passive energy device identified from system configuration information 210I.

In S3, the system model calculation unit performs calculation (e.g., calculation formula 212f (Math. 10)) using the obtained values and may specify control parameters ($u_{t-1}$) for the energy devices to be controlled (including fuel cell 103) from a result of the calculation ($s_{4,t+1}$ of hot water storage tank 105) (not shown in FIG. 13).

The device model calculation unit 212 may perform this calculation (calculation formula 212f (Math. 10)) in S3 in place of the system model calculation unit 202. More specifically, the device model calculation unit 212 may perform, for example, the calculation (calculation formula 212f (Math. 10)) using the value $H_{1,t} + H_{2,t}$ calculated from the value (the amount of heat $H_{1,t}$) of the active energy device (fuel cell 103 or the like).

The device model calculation unit 212 may obtain the calculation formula from the device model holding unit 212m storing the calculation formula.

The device model holding unit 212m may be provided in the supply-and-demand control apparatus 100 (see the device model holding unit 212m in FIG. 2) or outside the supply-and-demand control apparatus 100, e.g., in a server of the manufacturer of the added device 11B.

Also, to be more specific, the device model calculation unit 212 may obtain the calculation formula for the type of the added energy device from data (data 212fA) containing a plurality of calculation formulae (calculation formula 212f) for the plurality of types (types of devices) different from each other, held by the device model holding unit 212m, which formula is determined from the inputted system configuration information 201I.

Furthermore, for example, the above-mentioned value (the amount of heat $H_{1,t}$) of the active energy device (fuel cell 103) may change with a change in the specified control parameters (e.g., the control vector $u_{t-1}$ for fuel cell 103).

Control parameters, for example, may be specified from values (e.g., cost (PC) and values of energy devices on the downstream side of the passive energy device) calculated from the above-mentioned value ($s_{4,t+1}$ of hot water storage tank 105) of the passive energy device.

Also, for example, the supply-and-demand control apparatus 100 may be connected to a computer (see user PC 100a) of the user of the energy supply system 1, on which a web browser is installed when the energy device is added.

When system configuration information 210I is inputted, the system configuration input unit 210 may display in the display area 210bx of the web browser an object (see icon 103a in FIGS. 3 and 4) that indicates the energy device identified by the inputted system configuration information 210I and another object (see connection line 210d in FIG. 4) that indicates the connection between this energy device and another energy device connected to this energy device, which is identified by the system configuration information 210I.

That is, for example, the system configuration input unit 210 determines whether or not the type of the added energy device (added device 11B) identified by the inputted system configuration information 210I is "passive energy device". An object (icon 105a or connection line 210d) indicating the result of this determination may be displayed only when the added energy device is determined as a passive energy device.

The object to be displayed may be, for example, the icon 103a for the added energy device having a color different from the color of the icon 210c displayed in the case where this determination is not made. Also, the icon 103a or the like may be made different in shape from the icon 210c.

The object to be displayed may alternatively be, for example, the connection line 210d or the like having a color different from the colors of other connection lines (e.g., the control signal line extending from the supply-and-demand control apparatus 100).

The above-described object based on the determination is displayed to indicate that control with respect to details of control relatively difficult to forecast, unlike details of control in the case of no connection of the added energy device, is to be performed on the active energy device. The object to be displayed may be a message for indicating that such control is to be performed on the active energy device.

The device model calculation unit 212 may obtain, from the device model holding unit provided in a server (not shown in the figures) of the manufacturer of the passive energy device (hot water storage tank 105), the calculation formula (calculation formula 212f) for calculation of the passive energy device, held by the device model holding unit, and may perform calculation by the obtained calculation formula.

The system configuration input unit 210 may display the object (connection line 210d) indicating the connection between the passive energy device and the active energy device identified from the system configuration information 210I only when the calculation formula for the passive energy device is obtained by the device model calculation unit 212.

On the other hand, in a case where the calculation formula for the passive energy device is not obtained by the device model calculation unit 212, this object (connection line 210d) may not be displayed.

For example, in a case where the calculation formula for the passive energy device is not obtained by the device model calculation unit 212, a second object, such as a connection line having a color different from the color of the connection line 210d, may be displayed, while the former object (first object) is not displayed.

As described above, even when an energy device is added, energy devices to be controlled, including the energy device connected to the added energy device, can be suitably controlled.

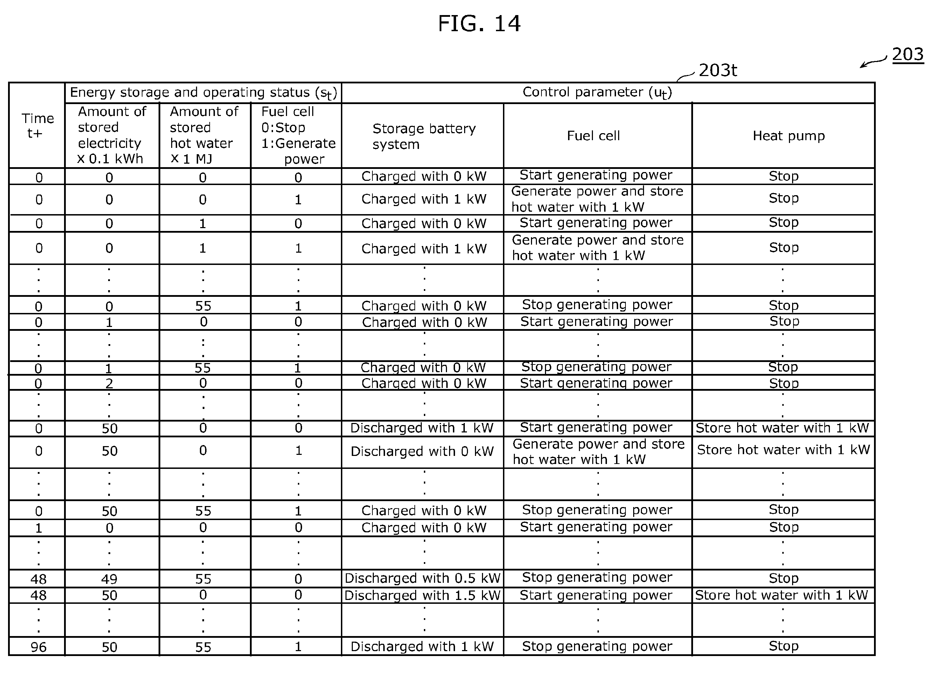

FIG. 14 shows an example of a control table 203t. In the control table 203t, as shown in FIG. 14, control parameters ($U_t$) to be respectively set for devices are stored in association with time (the first column in FIG. 14), amounts of stored energy at these points in time (amounts of stored electricity in the second column, amounts of stored heat in the third column), and the operating state of the device (the fourth column).

(Other Embodiments)

Other Embodiments of the present invention are described below.

FIG. 15 is a flowchart of the operation of the supply-and-demand control apparatus 100.

The supply-and-demand control apparatus 100 controls the operations of energy devices to be controlled, based on the input-output relationships between the devices already installed, before a new device is added (Sf1).

When the supply-and-demand control apparatus 100 detects addition of a device (Sf2: Yes), it obtains the input-output relationships between the devices including the added device (Sf3). Next, the supply-and-demand control apparatus 100 calculates control parameters for the energy devices to be controlled based on the input-output relationships between the devices including the added device (Sf4).

According to this Embodiment, the supply-and-demand control apparatus executes processing in Sf3 and Sf4 after addition of a new device in Sf2. Thus, each time a device is added, control parameters according not to the past input-output relationships before the addition but to the current input-output relationships after the addition are calculated. The cost of operation of the energy devices to be controlled can therefore be reduced. Also, a manager having expert knowledge can be saved from having to redo calculation of the model based on theory.

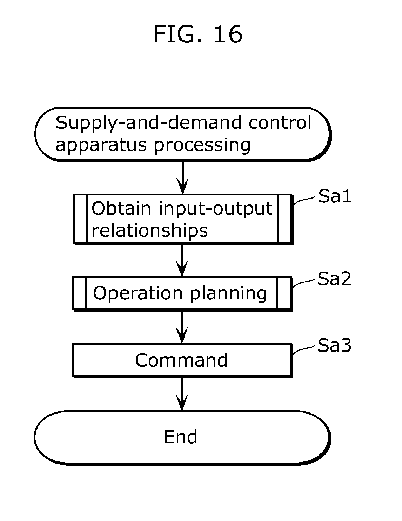

FIG. 16 is a flowchart concretely showing processing in Sf3 and Sf4 in FIG. 15.

First, the supply-and-demand control apparatus 100 obtains information (system configuration information 210I in FIG. 2) for specifying the input-output relationships between devices including an added energy device (Sa1).

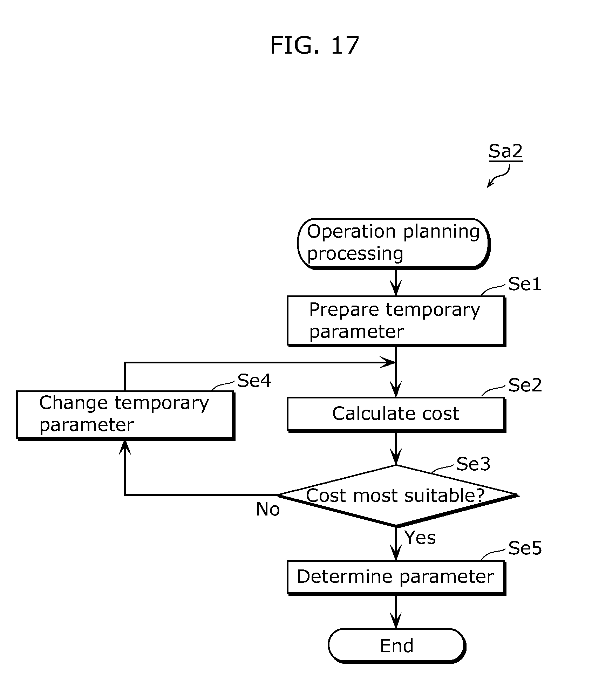

Next, the supply-and-demand control apparatus 100 determines details of control (control parameters) suitable for the obtained input-output relationships in a plurality of control details (control parameters) (Sa2). A method for this determination of control details (Sa2) will be described below with reference to FIG. 17.

The supply-and-demand control apparatus 100 then controls energy devices to be controlled, based on planned values of the determined control details (determined control parameters) (Sa3).

FIG. 17 is a flowchart showing an example of a concrete operation in processing (Sa2) for a determined control detail in FIG. 16.

The supply-and-demand control apparatus 100 first prepares a temporary control parameter (temporary parameter) (Se1).

The supply-and-demand control apparatus 100 then calculates the cost when the energy devices to be controlled are controlled by using the temporary control parameter prepared in Se1 (Se2) (see, for example, mathematical expression 3 and mathematical expression 5 shown above).

When the supply-and-demand control apparatus 100 determines that the calculated cost is a suitable cost (Se3: Yes), it determines that the temporary control parameter is a suitable control parameter (Se5).

In Se3, for example, when the calculated cost is smaller than a threshold value determined in advance (Se3: Yes), the supply-and-demand control apparatus 100 determines that the calculated cost is a suitable cost. When the calculated cost is larger than the threshold value (Se3: No), the supply-and-demand control apparatus 100 determines that the calculated cost is not a suitable cost.

In the case of determining in Se3 that the calculated cost is not a suitable cost (Se3: No), the temporary control parameter is replaced with the next temporary control parameter (Se4). Processing in Se2 and processing in the following steps are thereafter performed using the substituted temporary control parameter.

Processing in Se4 in FIG. 17 may not be performed. In such a case, the supply-and-demand control apparatus 100 generates a plurality of temporary control parameters in Se1, and calculates the cost using the generated temporary control parameters one by one in Se2. In Se3, the supply-and-demand control apparatus 100 determines, as a suitable control parameter, one of the plurality of generated temporary control parameters with which the lowest cost is calculated.

The temporary control parameter in FIG. 17 is, for example, the above-described control vector $u_t$.

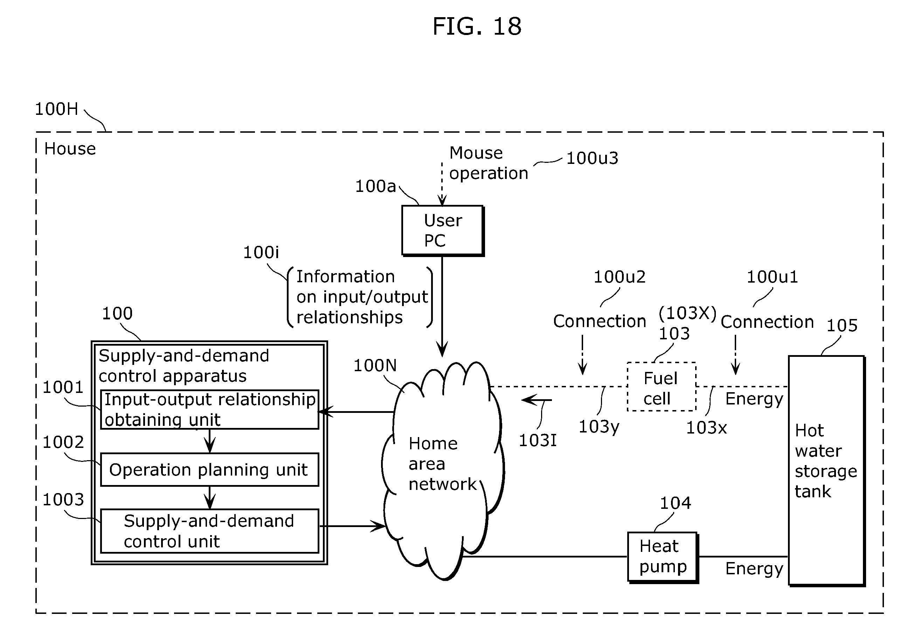

FIG. 18 is a diagram showing an example of a configuration of the energy supply system 1 according to another Embodiment of the present invention. Referring to FIG. 18, the supply-and-demand control apparatus 100 and an energy device to be controlled (e.g., heat pump 104) are connected to each other via a home area network 100N.

The supply-and-demand control apparatus 100 includes an input-output relationship obtaining unit 1001, an operation planning unit 1002, and a supply-and-demand control unit 1003. Processing in Sa1, processing in Sa2, and processing in Sa3 described above are performed by the input-output relationship obtaining unit 1001, the operation planning unit 1002, and the supply-and-demand control unit 1003 in FIG. 18, respectively.

The input-output relationship obtaining unit 1001 in FIG. 18 may include part or the whole of the system configuration input unit 210 in FIG. 1.

The same applies as appropriate to some other functional blocks shown in FIG. 1, as well as for those in this example.

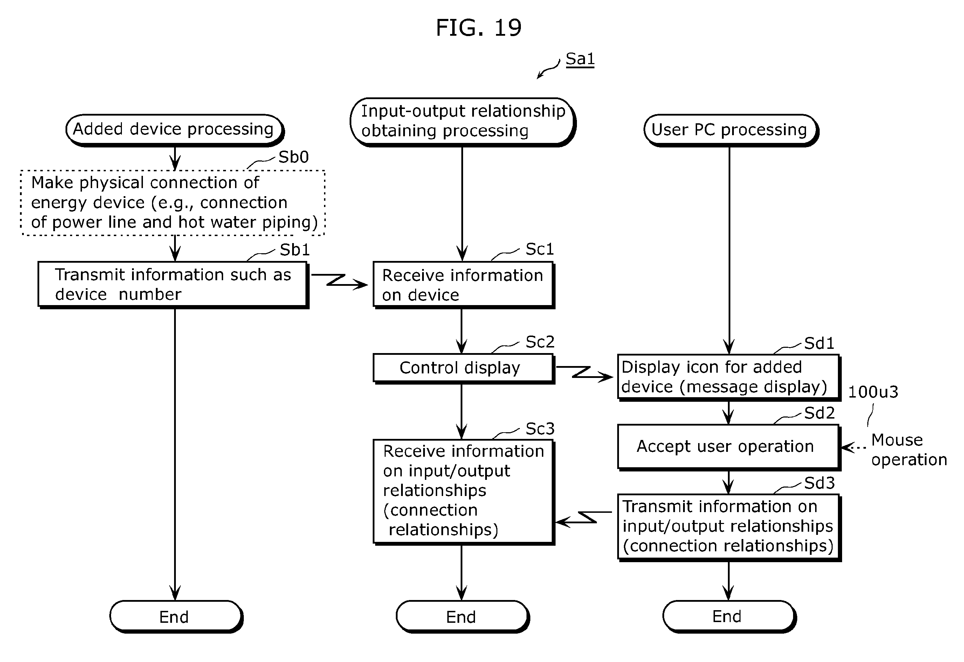

FIG. 19 is a sequence diagram showing processing before the supply-and-demand control apparatus 100 obtains the input-output relationships between devices including the supply-and-demand control apparatus 100 and energy devices.

First, an energy device to be added is connected to the energy supply system 1 (Sb0). For example, in the case shown in FIG. 18, the fuel cell 103 is connected to the hot water storage tank 105 and to the supply-and-demand control apparatus 100 (see connections 100u1 and 100u2 shown in FIG. 18).

At this time, as shown in FIG. 18, the energy device to be added (fuel cell 103) may be connected to a network provided in a house 100H (home area network 100N in FIG. 18) (connection 103y).

Next, the added energy device (fuel cell 103) transmits information indicating that it is added to the supply-and-demand control apparatus 100 via the network (Sb1).

The supply-and-demand control apparatus 100 receives the transmitted information (Sc1), and causes an external display to display an interface (such as screen 210by in FIG. 3) for having a user to input input-output relationships between the devices (Sc2). As a result of transmission of information on the input-output relationships between the devices through this interface (Sd3), the supply-and-demand control apparatus 100 obtains first information 100i (FIG. 18) for specifying the input-output relationships between the energy devices including the added energy device (Sc3).

The first information 100i is information necessary for specifying details of control to be performed after addition of the energy device (fuel cell 103).

Processing (Sc3) for obtaining the first information 100i may not be performed just in the above-described way. For example, the information may be obtained upon performing control to display the above-described user interface in the display area on the supply-and-demand control apparatus 100 (Sc2) and accepting an operation 100u3 on the supply-and-demand control apparatus 100.

It is not necessarily required that processes in Sc2 and Sc3 and processes in Sd1 to Sd3 be performed in order to obtain information for specifying the input-output relationships. For example, referring to FIG. 18, the supply-and-demand control apparatus 100 may specify the input-output relationships between the devices by using information on the addresses of the devices on the network or port number information on the devices. In such a case, the supply-and-demand control apparatus 100 can obtain information for specifying the input-output relationships between the devices including the added energy device by obtaining second information 103I (FIG. 18) for specifying the input-output relationships between the devices via the home area network 100N from the added energy device (for example, fuel cell 103).

**EP 2 541 716 A1**

In a portion or the whole of the specification of the present application, "energy device" refers to a device that handles energy and has one of the functions of (i) generating energy (electricity), (ii) being supplied with energy from the outside, (iii) storing energy, (iv) consuming energy, and (v) supplying energy, corresponding to, for example, the solar power system 101, the electricity storage system 102, the fuel cell 103, the heat pump 104, and the hot water storage tank 105 shown in FIG. 1, or like devices.

An energy device may be controlled by means of a control parameter specified (found by a search) in a plurality of control parameters.

A plurality of energy devices (such as electricity storage system 102, fuel cell 103 and heat pump 104) may be provided, as shown in FIG. 1 and other figures.

Also, each energy device may be controlled by means of a control parameter specified from a value (the amount of energy input/output or the like) in another energy device.

The energy supply system 1 may be, for example, a home energy management system (HEMS) or the like. The supply-and-demand control apparatus 100 may be, for example, a portion or the whole of a control apparatus constituting a HEMS system.

One energy device or a plurality of energy devices may be added.

A portion or the whole of the supply-and-demand control apparatus 100 in FIG. 18 may be specifically the same as that of the supply-and-demand control apparatus 100 in FIG. 2. For example, the supply-and-demand control apparatus 100 in FIG. 18 may include the demand forecast unit 201 in FIG. 2 to operate more suitably based on the processing in the demand forecast unit 201.

The demand forecast unit 201 may include, for example, an obtaining unit that obtains information on power consumption, etc., and a forecast unit that obtains demand forecast data from the obtained information.

The present invention has been described based on the above-described Embodiments. However, the present invention is not limited to the above-described Embodiments. Various improvements and modifications can be made without departing from the gist of the invention. For example, the following ones may be made.

For example, system configuration information 210I (FIG. 2) to be inputted may include first and second information items described below. The first information item is information for identifying (the type (model number or the like) of) a device to be added (see device 11B to be added in FIG. 7). The second information item is information for identifying a connection-destination device to which the device to be added is connected.

To be more specific, for example, from the first information item, a type of device designated by a tapping operation on the keyboard (mentioned above) on the input unit 210a (FIG. 3) may be identified as a type of device to be added.

Also, to be more specific, for example, a user operation to move a cursor 210m (FIG. 3) displayed in the display area 210bx (FIG. 3) to a position on one icon 210c may be performed.

From the second information item, for example, the device represented by the icon 210c at the position to which the cursor 210m is moved by this operation may be identified as a connection-destination device.

From the second information item, the device represented by the icon 210c at a position at which the display area 210bx, which is a touch panel, is touched by the user may be identified.

Thus, the supply-and-demand control apparatus 100 is provided in the energy supply system 1 including, for example, active energy devices (see active energy device 11a (FIG. 7), fuel cell 103 (FIG. 1), etc.,) that operate according to control parameters (e.g., control vector $u_{t-1}$), and passive energy devices (see passive energy device 11b, hot water storage tank 105) that passively has energy inputted from or outputted to demand-side devices (demand-side device 11c) and energy devices (including active energy device 11a) other than the passive energy devices, and generates control parameters for controlling the active energy devices. The supply-and-demand control apparatus 100 includes the system configuration input unit 210 that obtains energy input-output relationships (system configuration information 210I) between the active energy devices and the passive energy devices; the system model calculation unit 202 that specifies, from the obtained energy input-output relationships, a sequence of calculation in which an amount of energy input or output of each of the energy devices is calculated (e.g., a sequence of calculation in which the amount of energy input or output ($H_{1,t} + H_{2,t}$) to be inputted to or outputted from the hot water storage tank 105 is calculated), and specifies the value (e.g., ($H_{1,t} + H_{2,t}$)) of the amount of energy to be inputted to or outputted from one of the passive energy devices (hot water storage tank 105) from the amount of energy ($H_{1,t}$) to be inputted to or outputted from one of the energy devices (fuel cell 103) that is calculated earlier (before the calculation of the amount of energy to be inputted to or outputted from the hot water storage tank 105) in the specified sequence of calculation of the amount of energy input or output; the device model calculation unit 212 that calculates, in the specified sequence of calculation of the amount of energy input or output, the energy input or output of each of the energy devices (fuel cell 103, hot water storage tank 105, and any other device) included in the energy supply system 1, from a planned value of the control parameter (e.g., $u_{2,t-1}$ of fuel cell 103) for the active energy device (fuel cell 103) and the specified value ($H_{1,t} + H_{2,t}$) of the amount of energy to be inputted to or outputted from the passive energy device (hot water storage tank 105); and the planning control unit 204x that generates the planned value of the control parameter for the active energy device (control vector

$u_{t-1}$ or the like for the active energy device 11a), and sends the generated planned value of the control parameter as a command to the active energy device (performs control using the planned value (control parameter)) when the amount of energy input or output of each of the energy devices (fuel cell 103, hot water storage tank 105, and any other device) calculated based on the generated planned value of the control parameter is equal to a predetermined amount of energy input/output (for example, such that a cost calculated from the amount of energy input/output is minimized).

To be more specific, the supply-and-demand control apparatus 100 may further include, for example, the device model calculation unit 212 (see FIGS. 11 and 2) holding a relational expression (calculation formula 212f) relating to the amount of energy input or output of a type of each of the energy devices; when a new type of energy device (e.g., passive energy device 11b (hot water storage tank 105)) is added to the energy supply system 1, the system configuration input unit 210 may obtain the type of the added energy device and energy input/output relationships (system configuration information 210l) between the energy devices (e.g., between hot water storage tank 105 and fuel cell 103) including the added energy device; and, in a case where the obtained system configuration information 210l has information on a new type of energy device (passive energy device 11b) added thereto, the device model calculation unit 212 may obtain a relational expression relating to the energy input or output of the type of energy device added.

Also, more specifically, the energy supply system 1 may include, for example, an energy device (electricity storage system 102, hot water storage tank 105) including an electricity storage unit or a heat storage unit (energy storage unit), and the device model calculation unit 212 in the supply-and-demand control apparatus 100 may calculate an amount of stored electricity or an amount of stored heat (an amount of stored energy) at each point in time from a noted time point to a time point a certain time step after the noted time point from the amount of stored electricity or the amount of stored heat (the amount of stored energy) in the energy device having the electricity storage unit or the heat storage unit (energy storage unit) at the noted time point (time point t), a planned value of a control parameter for an active energy device, and the value of an amount of energy to be inputted to or outputted from a passive energy device, specified by the system model calculation unit 202.

Also, more specifically, for example, the supply-and-demand control apparatus 100 may include the demand forecast unit 201 (see FIGS. 12 and 2) that forecasts a time sequence pattern of demand for one or both of electricity and heat supplied by the energy supply system 1; the predetermined amount of energy input/output may indicate an amount of energy input/output with which the energy cost is minimum when the energy supply system 1 supplies energy in the forecast time sequence pattern; and the planning control unit 204x may search for the planned values of the control parameters with which the energy cost is minimum when energy is supplied in the forecast time sequence pattern.

Also, more specifically, in use with the supply-and-demand control apparatus 100, for example, the active energy device may be one of a heat pump (e.g., heat pump 104), a fuel cell (e.g., fuel cell 103), and a storage battery system (e.g., electricity storage system 102) or a plurality of the active energy devices, which are two or more of these, may be provided, and the passive energy device may be a hot water storage tank (e.g., hot water storage tank 105).

Also, more specifically, for example, the supply-and-demand control apparatus 100 may include the demand forecast unit 201 (see FIGS. 12 and 2) that obtains demand forecast data indicating a demand for electricity (energy) and a demand for heat (energy) in a building (see FIG. 1) in which the supply-and-demand control apparatus 100 is provided; the planning control unit 204x may include the supply-and-demand planning unit 200 that calculates planned values by using the obtained demand forecast data, such that the amount of energy input or output of each of the devices, which correspond to the amount of stored electricity or electric power (energy) (the amount of storage) stored in the electricity storage unit (e.g., electricity storage system 102) and the amount of stored heat (energy) (the amount of storage) stored in the heat storage unit (e.g., hot water storage tank 105), and which are calculated from the amount of stored electricity, the amount of stored heat and the planned values with respect to these amounts by the device model calculation unit, is equal to the above-described predetermined amount of energy input/output, and the control table 203 in which the planned values corresponding to amounts of stored electricity and amounts of stored heat and calculated by the supply-and-demand planning unit 200 are stored using, as indices, combinations of the amounts of stored electricity and the amounts of stored heat; and the active energy device may be at least a portion (hot water storage tank 105) of an energy device (e.g., energy device 102x (the whole of electricity storage system 102 and hot water storage tank 105)) that stores or supplies each of the amount of stored electricity and the amount of stored heat (changes (controls) the amount of stored energy).

More specifically, for example, the energy device 102x may change each of the amounts of stored electric power and heat (energy) (the amount of stored electricity, the amount of stored heat (the amount of storage)) through control of the operation of the electricity storage unit, for example. That is, for example, the amount of storage may be controlled.

Also, control may be performed by the supply-and-demand control unit 204 or the like using planned values stored in association with the combinations of detected amounts of stored electricity and detected amounts of stored heat in the control table. More specifically, the planned values are stored in association with time points. When one of the associated time points is the current time, control using the corresponding planned values may be performed.

After addition of the device 1B to be added, the second control (see Sf4) different from the first control before the addition is performed on the energy device to be controlled, thus enabling suitable control with reliability.

For example, while the energy device to be controlled is a first active energy device (e.g., heat pump 104), the added device 11B may be another device, a second active energy device (e.g., fuel cell 103). The added device 11B may alternatively be a passive energy device (hot water storage tank 105) or the like.

When the added device 11B is connected to the energy device identified by means of inputted information (Sf3), sufficiently suitable control is performed as the second control (Sf4). Also after the addition, sufficiently suitable control is performed, thus enabling sufficiently suitable control with reliability. Moreover, the second control is performed based on data such as the address of the added device 11B in the above-described inputted information, for example. Thus, data enabling further sufficiently suitable control is presented to enable further suitable control. Also, for example, an icon having an appearance or the like different in color and shape from appearances or the like of other icons is displayed as an icon (see, for example, 103a in FIG. 3) for the added device 11B, and the different appearance or the like is seen by the user, so that a relatively simple operation can be maintained as a user operation.

It is to be noted that a computer program for implementing the above functions of the supply-and-demand control apparatus 100 may be constructed, a recording medium on which such a computer program is recorded may be constructed, and an integrated circuit for implementing the functions may be constructed.

It is to be noted that the present invention can be implemented not only as an apparatus, a system, and an integrated circuit, but also as (i) a method using, as steps, processing units included in such an apparatus and the like, (ii) a program causing a computer to execute these steps, (iii) a computer-readable recording medium, such as CD-ROM, on which the program is recorded, and (iv) information, data, or signals indicating the program. Such a program, information, data, and a signal may be distributed via communication networks, such as the Internet.

It is to be noted that the scope of the present invention includes other Embodiments that are obtained by making various modifications that those skilled in the art could think of, to the present Embodiment, or by combining constituents in different embodiments.

[Industrial Applicability]

The supply-and-demand control apparatus according to the present invention has the system configuration input unit 210, the system model calculation unit 202, and so on, and is useful in minimizing the energy cost or the environmental cost of a building.

[Reference Signs List]

| | |
|---|---|
| 100 | Supply-and-demand control apparatus |
| 100i | Information |
| 101 | Solar power system |
| 102 | Electricity storage system |
| 104 | Heat pump |
| 105 | Hot water storage tank |
| 200 | Supply-and-demand planning unit |
| 201 | Demand forecast unit |
| 202 | System model calculation unit |
| 203 | Control table |
| 204 | Supply-and-demand control unit |
| 210 | System configuration input unit |
| 211 | System configuration storage unit |
| 212 | Device model calculation unit |
| 1001 | Input-output relationship obtaining unit |
| 1002 | Operation planning unit |
| 1003 | Supply-and-demand control unit |

**Claims**

**1.** A supply-and-demand control apparatus, comprising:

an obtaining unit configured to obtain (i) power consumption of a device that operates using electric power and (ii) heat consumption of a device that operates using heat;
a forecast unit configured to obtain demand forecast data on electric power and an amount of heat, using the obtained power consumption and the obtained heat consumption, respectively;
a system configuration obtaining unit configured to obtain information when an energy device is newly added to a building, the information being for specifying an energy input-output relationship between energy devices including the added energy device;
a calculation unit configured to calculate, using the demand forecast data and the information for specifying the energy input-output relationship, a planned value of a control parameter for controlling an operation of each of the energy devices to be controlled; and
a planning control unit configured to transmit the calculated planned value to each of the energy devices to be controlled which include the added energy device.

2. The supply-and-demand control apparatus according to Claim 1,
wherein said system configuration obtaining unit is configured to (i) cause an external device to display a screen for inputting the energy input-output relationship, and (ii) obtain the information inputted by a user on the screen.

3. The supply-and-demand control apparatus according to Claim 2,
wherein the screen includes an icon representing each of the energy devices, and
the icon representing the added energy device is different from the icon representing an energy device other than the added energy device in color, shape, or line.

4. The supply-and-demand control apparatus according to Claim 1,
wherein said supply-and-demand control apparatus is further connected via a network to each of the energy devices to be controlled, and holds address information, on the network, of each of the energy devices to be controlled, to specify the energy input-output relationship between the energy devices, and
said system configuration obtaining unit is configured to obtain the address information of the added energy device, to specify the input-output relationship between the devices including the added energy device.

5. The supply-and-demand control apparatus according to Claim 1,
wherein said supply-and-demand control apparatus (i) is provided in an energy supply system including an active energy device that operates according to the control parameter and a passive energy device that passively has energy inputted from and outputted to a demand-side device and an energy device other than the active energy device, and (ii) generates the control parameter for controlling the active energy device,
said system configuration obtaining unit is configured to obtain, as the information on the energy input-output relationship, the energy input-output relationship between the active energy device and the passive energy device,
said calculation unit includes a system model calculation unit and a device model calculation unit,
said system model calculation unit is configured to (i) specify, from the information on the energy input-output relationship obtained by said system configuration obtaining unit, a sequence of calculation in which an amount of energy input or output of each of the energy devices is calculated, and (ii) specify a value of the amount of energy to be inputted to or outputted from the passive energy device, from the amount of energy to be inputted to or outputted from one of the energy devices that is calculated earlier in the specified sequence of calculation of the amount of energy input or output,
said device model calculation unit is configured to calculate, in the sequence of calculation of the amount of energy input or output specified by said system model calculation unit, the amount of energy input or output of each of the energy devices included in the energy supply system, from the planned value of the control parameter for the active energy device and the value of the amount of energy inputted to or outputted from the passive energy device specified by said system model calculation unit, and
said planning control unit is configured to generate the planned value of the control parameter for the active energy device, and send the generated planned value of the control parameter as a command to the active energy device when the amount of energy input or output of each of the energy devices calculated by said device model calculation unit based on the generated planned value of the control parameter is equal to a predetermined amount of energy input or output.

6. The supply-and-demand control apparatus according to Claim 5, further comprising
a device model holding unit configured to hold a relational expression relating to the amount of energy input or output according to a type of each of the devices,
wherein when an energy device of a new type is added, said system configuration obtaining unit is configured to obtain information for identifying the type of the added energy device and for specifying an energy input-output relationship between the energy devices including the added energy device, and
when the information obtained from said system configuration obtaining unit is information indicating addition of the energy device of the new type, said device model calculation unit is configured to obtain, from said model holding unit, the relational expression relating to the amount of energy input or output of the added energy device of the new type.

7. The supply-and-demand control apparatus according to Claim 5 or Claim 6,
wherein the energy supply system includes an energy device including an electricity storage unit, and
said device model calculation unit is configured to calculate an amount of electricity stored in the energy device including the electricity storage unit, with respect to each point in time from a noted time point to a time point a certain time step after the noted time point, from the amount of electricity at the noted time point, the planned value of the control parameter for the active energy device, and the value of the amount of energy to be inputted to or outputted from the passive energy device specified by said system model calculation unit.

8. The supply-and-demand control apparatus according to Claim 5 or Claim 6,
wherein the energy supply system includes an energy device including a heat storage unit, and
said device model calculation unit is configured to calculate an amount of heat stored in the energy device including the heat storage unit, with respect to each point in time from a noted time point to a time point a certain time step after the noted time point, from the amount of heat at the noted time point, the planned value of the control parameter for the active energy device, and the value of the amount of energy to be inputted to or outputted from the passive energy device, specified by said system model calculation unit.

9. The supply-and-demand control apparatus according to one of Claims 6 to 8,
wherein said demand forecast unit is configured to generate the demand forecast data as a time sequence pattern of demand for one or both of electricity and the heat supplied by the energy supply system,
the predetermined amount of energy input or output indicates an amount of energy input or output with which an energy cost is minimum when the energy supply system supplies energy in the time sequence pattern forecast by said demand forecast unit, and
said planning control unit is configured to search for the planned value of the control parameter with which the energy cost is minimum when the energy is supplied in the time sequence pattern forecast by said demand forecast unit.

10. The supply-and-demand control apparatus according to one of Claims 6 to 9,
wherein the active energy device is at least one of a heat pump, a fuel cell, and an electricity storage cell, and
the passive energy device is a hot water storage tank.

11. The supply-and-demand control apparatus according to Claim 6,
wherein said planning control unit includes:

a supply-and-demand planning unit configured to calculate, using the demand forecast data obtained by said demand forecast unit, the planned value with which the amount of energy input or output of each of the energy devices calculated by said device model calculation unit is equal to the predetermined amount of energy input or output, from an amount of stored electricity and an amount of stored heat which respectively correspond to an amount of electricity stored in an electricity storage unit and an amount of heat stored in a heat storage unit, and the planned value; and
a control table in which the planned value corresponding to the amount of stored electricity and the amount of stored heat and calculated by said demand planning unit is stored using a combination of the amount of stored electricity and the amount of stored heat as an index, and
the active energy device is at least part of the energy device which stores or supplies each of the amount of stored electricity and the amount of stored heat.

12. The supply-and-demand control apparatus according to Claim 6,
wherein the energy device is provided in a building in which the energy supply system is provided,
the energy device is controlled by a control parameter specified among a plurality of control parameters,
the energy device provided is plural in number,
each of the energy devices is controlled by the control parameter specified from a value in another one of the energy devices,
when an additional energy device is added to the energy devices, said system configuration obtaining unit is configured to input system configuration information including an address of the additional energy device,

the address is an address used to obtain a value of the additional energy device,

said system model calculation unit is configured to obtain the value of the additional energy device using the address included in the inputted system configuration information, and

said planning control unit is configured to control the energy device other than the additional energy device, using the control parameter specified from the obtained value of the additional energy device when the system configuration information is inputted.

13. The supply-and-demand control apparatus according to Claim 12,

the additional energy device is the passive energy device,

said system configuration obtaining unit is configured to input the system configuration information for identifying the active energy device connected to the passive energy device,

said system model calculation unit is configured to specify the control parameter of the energy device to be controlled, from a result of calculation using a value indicating a state of the identified active energy device and the value of the additional energy device obtained from the address identified, and

said device model calculation unit is configured to perform the calculation from the two values.

14. The supply-and-demand control apparatus according to Claim 13,

wherein when the value of the additional energy device is changed after addition of the additional energy device, the specified control parameter of the energy device to be controlled is changed.

15. The supply-and-demand control apparatus according to Claim 14,

wherein when the passive energy device is added, said supply-and-demand control apparatus is connected to a computer of a user of the energy supply system, the computer having a web browser installed, and

when the system configuration information is inputted, said system configuration obtaining unit is configured to cause the computer to display, in a display region of the web browser, an object indicating the passive energy device having the address identified by the inputted system configuration information, and another object indicating a connection between the passive energy device and the active energy device identified by the system configuration information.

16. The supply-and-demand control apparatus according to Claim 1,

wherein said planning control unit is configured to control a first one of the energy devices,

said system configuration obtaining unit is configured to obtain second information from a device other than the first energy device to be controlled,

in a building in which said supply-and-demand control apparatus is provided, only the first energy device is provided only before addition of the second energy device, and after the addition, the second energy device is provided together with the first energy device,

a suitable control on the first energy device is a first control before the addition and is a second control after the addition,

the second information obtained from the other device indicates whether the other device is not the added second energy device and the addition has not yet been performed, or the other device is the second energy device and the addition has already been performed,

said planning control unit is configured to perform the first control only when the obtained second information indicates that the addition has not yet been performed, and perform the second control when the obtained second information indicates that the addition has already been performed,

the first control is not a control using the planned value calculated from the first information of the energy input-output relationship, and

the second control is a control using the planned value calculated from the first information.

17. A supply-and-demand control method, comprising:

obtaining (i) power consumption of a device that operates using electric power and (ii) heat consumption of a device that operates using heat;

obtaining demand forecast data on electric power and an amount of heat, using the obtained power consumption and the obtained heat consumption, respectively;

obtaining information when an energy device is added to a building, the information being for specifying an energy input-output relationship between energy devices including the added energy device;

calculating, using the demand forecast data and the information for specifying the energy input-output relationship, a planned value of a control parameter for controlling an operation of each of the energy devices to be controlled; and

transmitting the calculated planned value to each of the energy devices to be controlled which include the added energy device.

18. A computer program recorded on a non-transitory computer-readable recording medium, said computer program causing a computer to execute:

obtaining (i) power consumption of a device that operates using electric power and (ii) heat consumption of a device that operates using heat;
obtaining demand forecast data on electric power and an amount of heat, using the obtained power consumption and the obtained heat consumption, respectively;
obtaining information when an energy device is added to a building, the information being for specifying an energy input-output relationship between energy devices including the added energy device;
calculating, using the demand forecast data and the information for specifying the energy input-output relationship, a planned value of a control parameter for controlling an operation of each of the energy devices to be controlled; and
transmitting the calculated planned value to each of the energy devices to be controlled which include the added energy device.

FIG. 1

EP 2 541 716 A1

FIG. 2

Supply-and-demand control apparatus — 1, 100

- 210 System configuration input unit
- 210I System configuration information
- 211 System configuration storage unit
- 212 Device model calculation unit ($n, t, s_{n,t}$ Model input value → $s_{n,t+1}$ Energy input/output value, Cost)
- 212m Device model holding unit
- 212f (212fA) Relational expression (calculation formula) ...
- 202 System model calculation unit ($s_{t+1} = F(s_t, u_t, t)$, $PC(s_t, u_t, t)$)
- 201 Demand forecast unit (Forecast value, $t$)
- 200 Supply-and-demand planning unit ($t, s_t, u_t$)
- 203 Control table
- 204 Supply-and-demand control unit
- 131 Electric power sensor
- 132 Secondary calorimeter
- 102 to 105 Device n ($x_n(t)$, $u_n(t)$)

## FIG. 3

EP 2 541 716 A1

# FIG. 4

100a Supply-and-demand control apparatus — Control

133a Electric power sensor — Electricity

102a Control / Electricity storage system — Electricity

103a Control / Fuel cell — Electricity | Gas | Hot water

104a Control / Heat pump — Electricity | Hot water

132a Secondary calorimeter — Hot water

210d

121a Electricity / Electric power meter

122a Gas / Gas meter

105a Primary hot water | Secondary hot water / Hot water storage tank

EP 2 541 716 A1

# FIG. 5

EP 2 541 716 A1

FIG. 6

EP 2 541 716 A1

## FIG. 7

11B Device to be added

Addition

1

212 Device model calculation unit

Supply-and-demand control apparatus

Sequence of calculation, amount of energy input/output from other devices

210

100

System model calculation unit

System configuration input unit

202 Energy input-output relationship

Control parameter

Amount of energy input/output

Planning control unit

Control parameter

204x

11a Active energy device (e.g., heat pump, fuel cell, electricity storage system)

11x Energy device included in energy supply system

Energy input/output

11b Passive energy device (e.g., hot water storage tank)

11c Demand-side device (e.g., dishwasher)

# FIG. 8

<u>100</u>

```
                                    Planning control unit
        ┌──────────────────────────────────────────┐
        │  Supply-and-demand planning unit          │
        └──────────────────────────────────────────┘
      200
          ┌─────────────┐      ┌──────────────────┐
          │ Control table│─────▶│ Supply-and-demand│◀┈┈┈┈┈┈
          └─────────────┘      │ control unit     │┈┈┈┈┈┈▶
                               └──────────────────┘
                203                    204
```

204x
(204x1)

# FIG. 9

<u>100</u>

```
                                    Planning control unit
        ┌──────────────────────────────────────────┐
        │  Supply-and-demand planning unit          │
        └──────────────────────────────────────────┘
      200
                     ┌──────────────────┐
                  ┌─▶│ Supply-and-demand│◀┈┈┈┈┈┈
                     │ control unit     │┈┈┈┈┈┈▶
                     └──────────────────┘
                            204
```

204x
(204x2)

FIG. 10

100

Planning control unit

Supply-and-demand planning unit

200

Control table

203

204x
(204x3)

FIG. 11

EP 2 541 716 A1

**212m**

Device model holding unit

**212**

Device model calculation unit

Supply-and-demand control apparatus

Sequence of calculation, amount of energy input/output from other devices

Amount of energy input/output

System model calculation unit

**210**

System configuration input unit

**100**

Control parameter

**202**

Energy input-output relationship

Planning control unit

Control parameter

**204x**

# FIG. 12

# FIG. 13

Start

Obtain system configuration — S1

Calculate system model — S2

Calculate device model — S3

Control planning — S4

End

## FIG. 14

203

203t

| Time t+ | Energy storage and operating status ($s_t$) | | | Control parameter ($u_t$) | | |
|---|---|---|---|---|---|---|
| | Amount of stored electricity X 0.1 kWh | Amount of stored hot water X 1 MJ | Fuel cell 0:Stop 1:Generate power | Storage battery system | Fuel cell | Heat pump |
| 0 | 0 | 0 | 0 | Charged with 0 kW | Start generating power | Stop |
| 0 | 0 | 0 | 1 | Charged with 1 kW | Generate power and store hot water with 1 kW | Stop |
| 0 | 0 | 1 | 0 | Charged with 0 kW | Start generating power | Stop |
| 0 | 0 | 1 | 1 | Charged with 1 kW | Generate power and store hot water with 1 kW | Stop |
| ⋮ | ⋮ | ⋮ | ⋮ | ⋮ | ⋮ | ⋮ |
| 0 | 0 | 55 | 1 | Charged with 0 kW | Stop generating power | Stop |
| 0 | 1 | 0 | 0 | Charged with 0 kW | Start generating power | Stop |
| ⋮ | ⋮ | ⋮ | ⋮ | ⋮ | ⋮ | ⋮ |
| 0 | 1 | 55 | 1 | Charged with 0 kW | Stop generating power | Stop |
| 0 | 2 | 0 | 0 | Charged with 0 kW | Start generating power | Stop |
| ⋮ | ⋮ | ⋮ | ⋮ | ⋮ | ⋮ | ⋮ |
| 0 | 50 | 0 | 0 | Discharged with 1 kW | Start generating power | Store hot water with 1 kW |
| 0 | 50 | 0 | 1 | Discharged with 0 kW | Generate power and store hot water with 1 kW | Store hot water with 1 kW |
| ⋮ | ⋮ | ⋮ | ⋮ | ⋮ | ⋮ | ⋮ |
| 0 | 50 | 55 | 1 | Charged with 0 kW | Stop generating power | Stop |
| 1 | 0 | 0 | 0 | Charged with 0 kW | Start generating power | Stop |
| ⋮ | ⋮ | ⋮ | ⋮ | ⋮ | ⋮ | ⋮ |
| 48 | 49 | 55 | 0 | Discharged with 0.5 kW | Stop generating power | Stop |
| 48 | 50 | 0 | 0 | Discharged with 1.5 kW | Start generating power | Store hot water with 1 kW |
| ⋮ | ⋮ | ⋮ | ⋮ | ⋮ | ⋮ | ⋮ |
| 96 | 50 | 55 | 1 | Discharged with 1 kW | Stop generating power | Stop |

EP 2 541 716 A1

FIG. 15

```
            ┌─────────────┐
            │    Start     │
            └──────┬──────┘
                   │
   ┌──────────────►│                        ⟋Sf1
   │   ┌───────────▼─────────────────────────┐
   │   │ Control in latest input-output relationships │
   │   └───────────┬─────────────────────────┘
   │               │                   ⟋Sf2
   │          ◇────▼────◇
   │       ⟋             ⟍
   └──────◇  Addition detected? ◇
      No   ⟍             ⟋
            ◇─────┬─────◇
                  │ Yes
                  │              ⟋Sf3
        ┌─────────▼───────────────────────────┐
        │ Obtain input-output relationships between │
        │ devices including added device        │
        └─────────┬───────────────────────────┘
                  │              ⟋Sf4
        ┌─────────▼───────────────────────────┐
        │ Control in input-output relationship between │
        │ devices including added device        │
        └─────────┬───────────────────────────┘
                  │
            ┌─────▼───────┐
            │     End      │
            └─────────────┘
```

FIG. 16

Supply-and-demand control apparatus processing

Obtain input-output relationships — Sa1

Operation planning — Sa2

Command — Sa3

End

# FIG. 17

<u>Sa2</u>

```
Operation planning
processing
        |
        v
Prepare temporary        ─Se1
parameter
        |
        v
Calculate cost           ─Se2
        |
        v
Cost most suitable?      ─Se3
   No  /         \  Yes
      /           \
Change temporary  Determine parameter  ─Se5
parameter ─Se4        |
                      v
                     End
```

FIG. 18

## FIG. 19

Sa1

**Added device processing**

**Input-output relationship obtaining processing**

**User PC processing**

Sb0
```
Make physical connection of
energy device (e.g., connection
of power line and hot water piping)
```

Sb1
Transmit information such as device number

Sc1
Receive information on device

Sc2
Control display

Sd1
Display icon for added device (message display)

100u3

Sd2
Accept user operation ◄·· Mouse operation

Sc3
Receive information on input/output relationships (connection relationships)

Sd3
Transmit information on input/output relationships (connection relationships)

End

End

End

## INTERNATIONAL SEARCH REPORT

| International application No. |
|---|
| PCT/JP2011/001021 |

**A. CLASSIFICATION OF SUBJECT MATTER**
*H02J3/00*(2006.01)i

According to International Patent Classification (IPC) or to both national classification and IPC

**B. FIELDS SEARCHED**

Minimum documentation searched (classification system followed by classification symbols)
H02J3/00, F02G5/04, G05B13/02

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2004-236422 A  (Tokyo Gas Co., Ltd.),<br>19 August 2004 (19.08.2004),<br>paragraphs [0060] to [0071]; fig. 7<br>(Family: none) | 1,17,18<br>2-4<br>5-16 |
| Y | JP 2007-122231 A  (Yokogawa Electric Corp.),<br>17 May 2007 (17.05.2007),<br>paragraphs [0029] to [0031]; fig. 2 to 4<br>(Family: none) | 2,3 |
| Y | JP 2007-270659 A  (Toho Gas Co., Ltd.),<br>18 October 2007 (18.10.2007),<br>paragraphs [0034], [0038]; fig. 1<br>(Family: none) | 4 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 May, 2011 (12.05.11) | 24 May, 2011 (24.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP 3763767 B

**Non-patent literature cited in the description**

* **BAKIRTZIS, A.G. ; DOKOPOULOS, P.S.** Short term generation scheduling in a small autonomous system with unconventional energy sources. *Power Systems, IEEE Transactions,* August 1988, vol. 3 (3), 1230-1236